(19) Europäisches Patentamt
European Patent Office
Office européen des brevets

(11) EP 2 236 566 A1

(12) EUROPEAN PATENT APPLICATION

(43) Date of publication:
**06.10.2010 Bulletin 2010/40**

(51) Int Cl.:
***C09D 11/00*** *(2006.01)* ***C09D 11/10*** *(2006.01)*
***C09D 17/00*** *(2006.01)*

(21) Application number: **10158380.5**

(22) Date of filing: **30.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **31.03.2009 JP 2009084650**

(71) Applicant: **Fujifilm Corporation**
**Minato-ku**
**Tokyo 106-8620 (JP)**

(72) Inventors:
- **Saito, Ryo**
**Ashigarakami-gun Kanagawa 258-8577 (JP)**
- **Ishiji, Yohei**
**Fujinomiya-shi Shizuoka 418-8666 (JP)**

(74) Representative: **Grünecker, Kinkeldey, Stockmair & Schwanhäusser**
**Anwaltssozietät**
**Leopoldstrasse 4**
**80802 München (DE)**

# (54) Water-insoluble colorant dispersion

(57) A water-insoluble colorant dispersion, having:
fine particles of a water-insoluble colorant, each of the fine particles containing at least two kinds of colorant; and
a polymer compound having at least one repeating unit selected from the group consisting of repeating units represented by the following Formula (1) and (2);

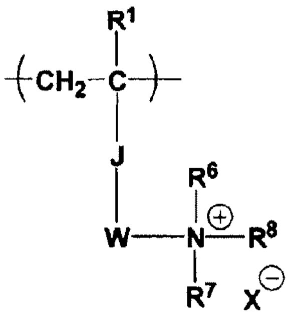

Formula (1)

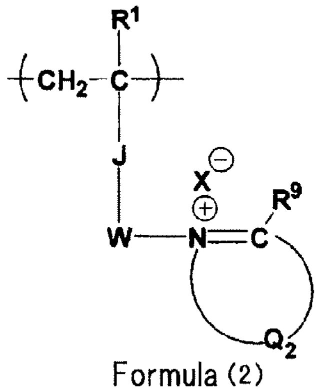

Formula (2)

wherein, $R^6$ to $R^8$ each independently represent a hydrogen atom or a substituent; $X^-$ is an anion group balancing with the cation electric charge on the nitrogen atom; $R^1$ represents a hydrogen atom or a substituent; J represents a specific divalent linking, an alkyl group, an aryl group, or an aralkyl group; W represents a single bond or a divalent linking group; $R^9$ represents a hydrogen atom or a substituent; $Q_2$ represents a group of atoms which is necessary for forming an unsaturated ring together with a carbon atom and a nitrogen atom.

EP 2 236 566 A1

Fig. 1

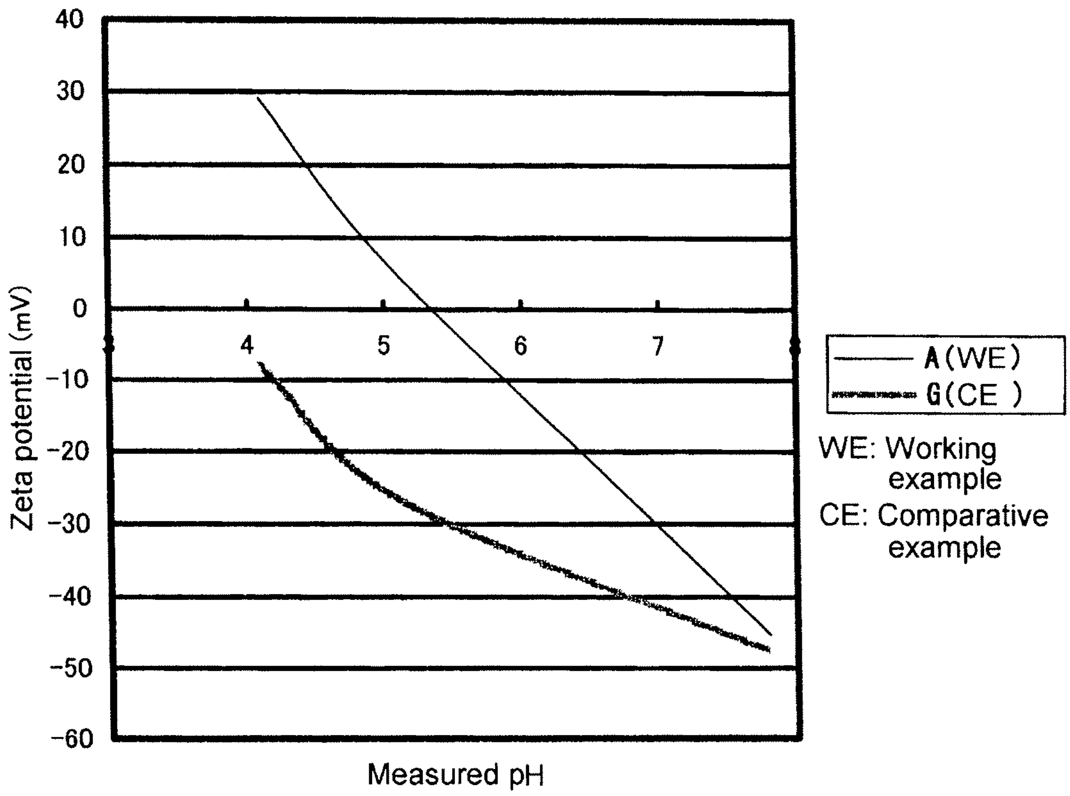
40
30
20
10
0
-10
-20
-30
-40
-50
-60
4
5
6
7
Zeta potential (mV)
Measured pH
A(WE)
G(CE )
WE: Working example
CE: Comparative example

## Description

### FIELD OF THE INVENTION

The present invention relates to a water-insoluble colorant dispersion.

### BACKGROUND OF THE INVENTION

Recently, application of a printing method of using an inkjet technique has been studied widely in the fields of industrial printing including relief printing, flat plate printing, gravure printing and offset printing. In these fields, so-called "print samples" such as Japan Color have been used as the standard of print colors, and inks have being developed to enable reproduction of colors consistent or close to the standard color tones (see, for example, JP-B No. 4152820). In addition, on inkjet recording ink, studies have been conducted to aim at improving print a density and expanding a color-reproducing range on a printed article (see, for example, JP-A Nos. 2004-2715, 2004-231692, 2007-186697 and 2006-274020). Further, it has been attempted to prevent ink blurring and improve ink discharging efficiency (see, for example, WO2006/137393 Pamphlet).

On the other hand, in the case of an aqueous inkjet printing, paper having an ejected ink may unwillingly be curled, upon printing a figure demanding a large amount of ink such as photograph or graph. The reason for the curling is considered because hydrogen bonds of cellulose, which is a component of the carrier paper, are cleaved by penetration of the ink solvent into the paper and then re-bind in random states when the paper is dried (Hirotaka Iijima, Kenichi Okubo and Kunitsuna Sasaki, "Konica Minolta Technology Report", Vol. 4 (2007)). For preventing such paper curling, it is proposed to use an ink using a solvent having a high Log P value, i.e., a highly hydrophobic organic solvent (such as triethylene glycol monobutylether), instead of using conventional highly hydrophilic glycerol having a small Log P value.

### SUMMARY OF THE INVENTION

According to the present invention, there is provided the following means:

(1) A water-insoluble colorant dispersion, comprising:

fine particles of a water-insoluble colorant containing at least two kinds of colorant; and
a polymer compound having at least one repeating unit selected from the group consisting of repeating units represented by the following Formula (1) or (2);

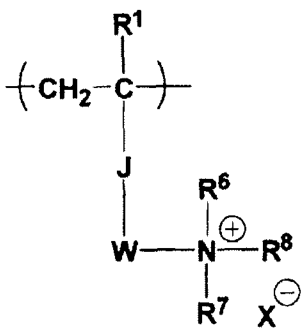

Formula (1)

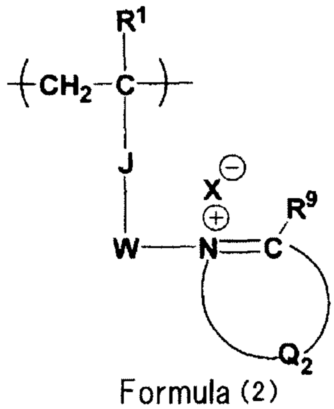

Formula (2)

wherein, $R^6$ to $R^8$ each independently represent a hydrogen atom or a substituent; $X^-$ is an anion group balancing with the cation electric charge on the nitrogen atom; $R^1$ represents a hydrogen atom or a substituent; J represents -CO-, - COO-, -CONR$^{10}$-, -OCO-, or a methylene group, a phenylene group, or -$C_6H_4$CO-; $R^{10}$ represents a hydrogen atom, an alkyl group, an aryl group, or an aralkyl group; W represents a single bond or a divalent linking group; $R^9$ represents a hydrogen atom or a substituent; $Q_2$ represents a group of atoms which is necessary for forming an unsaturated ring together with a carbon atom and a nitrogen atom.

(2) The water-insoluble colorant dispersion as described in the above item (1), wherein the polymer compound additionally has a repeating unit having at least one kind of acid group as hydrophilic unit.
(3) The water-insoluble colorant dispersion as described in the above item (2), wherein the acid group is selected from the group consisting of a carboxylic acid group, a sulfonic acid group, a hydroxyl group, and a phosphoric acid group.
(4) The water-insoluble colorant dispersion as described in any one of (1) to (3), wherein the water-insoluble colorant is a solid-solution pigment containing the at least two kinds of pigment.
(5) The water-insoluble colorant dispersion as described in any of items (1) to (4), wherein the colorant particle has a crystal structure.
(6) The water-insoluble colorant dispersion as described in any one of the above items (1) to (5), wherein the average particle diameter of the fine particles is 5 to 100 nm.
(7) The water-insoluble colorant dispersion as described in any one of the above items (1) to (6), wherein the water-insoluble colorant is an organic pigment selected from the group consisting of quinacridone organic pigments, diketopyrrolopyrrole organic pigments, mono azo yellow organic pigments, condensed azo organic pigments, quinophthalone organic pigments, benz-imidazolone organic pigments, and disazo yellow organic pigments.
(8) The water-insoluble colorant dispersion as described in any one of (1) to (7), wherein the water-insoluble colorant is a solid-solution pigment containing two or more kinds of quinacridone compounds selected from the group consisting of unsubstituted quinacridone, 2,9-dimethylquinacridone, 2,9-dichloroquinacridone and 3,10-dichloroquinacridone.

(9) A recording liquid comprising the fine particles of the water-insoluble colorant as described in any one of the above items (1) to (8), wherein the fine particles of the water-insoluble colorant is contained in an amount of 0.1 to 20% by mass with respect to a total mass of the recording liquid.

(10) The recording liquid as described in the above item (9), wherein the recording liquid is an inkjet recording liquid.
(11) An ink set comprising the recording liquid as described in the above item (9) or (10).
(12) A printed article which contains fine particles of a water-insoluble colorant, the printed article formed by the recording liquid as described in any one of the above item (9) or (10), using a provider, wherein the provider has a function to adjust an applied amount or concentration of the recording liquid, thereby light-to-dark contrast of the printed article is adjusted.
(13) An image-forming method, which comprises:

Providing: a recoding material, the recording liquid of the item (9) or (10), and an image-forming apparatus; and recording an image of the recording liquid on the recording material with the image-forming apparatus.

(14) A method of producing a water-insoluble colorant dispersion, comprising the steps of:

dissolving at least two kinds of water-insoluble colorant, a base, and a polymer compound in an aprotic water-soluble organic solvent,
the polymer compound having

(i) one or more acid groups selected from the group consisting of a carboxylic group, a sulfonic group, a hydroxyl group and
(ii) a phosphoric group as hydrophilic unit and at least one repeating unit selected from the repeating units represented by the following Formula (1) or (2); and

bringing the dissolved solution obtained in the step above into contact with an aqueous medium so as to generate fine particles of the water-insoluble colorant;

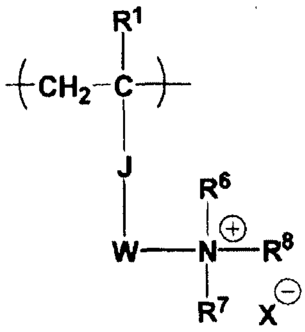

Formula (1)

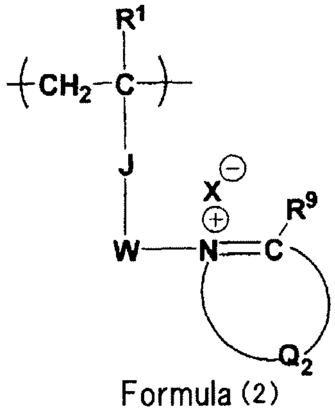

Formula (2)

wherein, $R^6$ to $R^8$ each independently represent a hydrogen atom or a substituent; $X^-$ is an anion group balancing with the cation electric charge on the nitrogen atom; $R^1$ represents a hydrogen atom or a substituent; J represents -CO-, - COO-, $-CONR^{10}-$, -OCO-, or a methylene group, a phenylene group, or $-C_6H_4CO-$; $R^{10}$ represents a hydrogen atom, an alkyl group, an aryl group, or an aralkyl group; W represents a single bond or a divalent linking group; $R^9$ represents a hydrogen atom or a substituent; $Q_2$ represents a group of atoms which is necessary for forming an unsaturated ring together with a carbon atom and a nitrogen atom. (15) The method of producing a water-insoluble colorant dispersion as described in item (14), further comprising a step of heat-treating the dispersion.

Other and further features and advantages of the invention will appear more fully from the following description, appropriately referring to the accompanying drawing.

BRIEF DESCRIPTION OF THE DRAWINGS

Fig. 1 is a graph showing pH dependence of a zeta potential of an ink prepared in Examples.

DETAILED DESCRIPTION OF THE INVENTION

The present invention is explained in detail below.
The dispersion according to the present invention preferably contains fine particles of a water-insoluble colorant containing at least two kinds of colorant, a polymer compound having at least one repeating unit selected from the repeating units represented by Formula (1) or (2) (hereinafter, the polymer compound may merely be referred to as the particular polymer compound) and additionally water.
It has been found in the present invention that high dispersion stability that is not possible with only one pigment can be obtained by using fine particles containing two or more kinds of colorants as described above, in interaction of the fine particles with the coexisting particular polymer compound. Although the reason is not clear, it is estimated that the structure of the solid containing at least two or more kinds of colorants in combination is different from that containing each colorant and the surface energy of the water-insoluble colorants is increased. It is possible on the other hand that the interaction of the particular polymer compound according to the present invention with the colorant (apparently, acid-base interaction) is strong. In addition, when the polymer compound is used with a water-insoluble colorant containing at least two or more kinds of colorants, the interaction described above may be strengthened further. Therefore, it is considered that the particular polymer compound according to the present invention is not easily liberated from the water-insoluble colorant and the highly stabilized dispersion state can be kept, even when a highly hydrophobic organic solvent is used as the dispersion medium.
An organic pigment that can be used in the dispersion of the present invention is not limited in hue and structure thereof, and examples include a perylene compound pigment, perynone compound pigment, quinacridone compound pigment, quinacridonequinone compound pigment, anthraquinone compound pigment, anthanthrone compound pigment, benzimidazolone compound pigment, condensed disazo compound pigment, disazo compound pigment, azo compound pigment, indanthrone compound pigment, indanthrene compound pigment, quinophthalone compound pigment, quinoxalinedione compound pigment, metallic complex azo compound pigment, phthalocyanine compound pigment, triaryl carbonium compound pigment, dioxazine compound pigment, aminoanthraquinone compound pigment, diketopyrrolopyrrole compound pigment, naphthole AS compound pigment, thioindigo compound pigment, isoindoline compound pigment, isoindolinone compound pigment, pyranthrone compound pigment or isoviolanthrone compound pigment, or a mixture thereof.

More specifically, examples of the organic pigment include perylene-series organic pigments, such as C.I. Pigment Red 179, C.I. Pigment Red 190, C.I. Pigment Red 224, and C.I. Pigment Violet 29; perynone-series organic pigments, such as C.I. Pigment Orange 43, and C.I. Pigment Red 194; quinacridone-series organic pigments, such as C.I. Pigment Violet 19, C.I. Pigment Violet 42, C.I. Pigment Red 122, C.I. Pigment Red 192, C.I. Pigment Red 202, C.I. Pigment Red 207, and C.I. Pigment Red 209; quinacridonequinone-series organic pigments, such as C.I. Pigment Red 206, C.I. Pigment Orange 48, and C.I. Pigment Orange 49; anthraquinone-series organic pigments, such as C.I. Pigment Yellow 147; anthanthrone-series organic pigments, such as C.I. Pigment Red 168; benzimidazolone-series organic pigments, such as C.I. Pigment Brown 25, C.I. Pigment Violet 32, C.I. Pigment Yellow 120, C.I. Pigment Yellow 180, C.I. Pigment Yellow 181, C.I. Pigment Orange 36, C.I. Pigment Orange 62, and C.I. Pigment Red 185; condensed disazo-series organic pigments, such as C.I. Pigment Yellow 93, C.I. Pigment Yellow 94, C.I. Pigment Yellow 95, C.I. Pigment Yellow 128, C.I. Pigment Yellow 166, C.I. Pigment Orange 34, C.I. Pigment Orange 13, C.I. Pigment Orange 31, C.I. Pigment Red 144 (C.I. No. 20735), C.I. Pigment Red 166, C.I. Pigment Yellow 219, C.I. Pigment Red 220, C.I. Pigment Red 221, C.I. Pigment Red 242, C.I. Pigment Red 248, C.I. Pigment Red 262, and C.I. Pigment Brown 23; disazo-series organic pigments, such as C.I. Pigment Yellow 13, C.I. Pigment Yellow 83, C.I. Pigment Yellow 155, and C.I. Pigment Yellow 188; azo-series organic pigments, such as C.I. Pigment Red 187, C.I. Pigment Red 170, C.I. Pigment Yellow 74, C.I. Pigment Red 48, C.I. Pigment Red 53, C.I. Pigment Orange 64, and C.I. Pigment Red 247; indanthrone-series organic pigments, such as C.I. Pigment Blue 60; indanthrene-series organic pigments, such as C.I. Pigment Blue 60; quinophthalone-series organic pigments, such as C.I. Pigment Yellow 138; quinoxalinedione-series organic pigments, such as C.I. Pigment Yellow 213; metallic complex azo-series organic pigments, such as C.I. Pigment Yellow 129, and C.I. Pigment Yellow 150; phthalocyanine-series organic pigments, such as C.I. Pigment Green 7, C.I. Pigment Green 36, C.I. Pigment Green 37, C.I. Pigment Blue 16, C.I. Pigment Blue 75, and C.I. Pigment Blue 15 (including 15:1, 15:6, others); triaryl carbonium-series organic pigments, such as C.I. Pigment Blue 56, and C.I. Pigment Blue 61; dioxazine-series organic pigments, such as C.I. Pigment Violet 23, and C.I. Pigment Violet 37; aminoanthraquinone-series organic pigments, such as C.I. Pigment Red 177; diketopyrrolopyrrole-series organic pigments, such as C.I. Pigment Red 254, C.I. Pigment Red 255, C.I. Pigment Red 264, C.I. Pigment Red 272, C.I. Pigment Orange 71, and C.I. Pigment Orange 73; naphthole AS-series organic pigments, such as C.I. Pigment Red 187, and C.I. Pigment Red 170; thioindigo-series organic pigments, such as C.I. Pigment Red 88; isoindoline-series organic pigments, such as C.I. Pigment Yellow 139, C.I. Pigment Orange 66; isoindolinone-series organic pigments, such as C.I. Pigment Yellow 109, C.I. Pigment Yellow 110, and C.I. Pigment Orange 61; pyranthrone-series organic pigments, such as C.I. Pigment Orange 40, and C.I. Pigment Red 216; and isoviolanthrone-series organic pigments, such as C.I. Pigment Violet 31.

In the above described material, the water-insoluble colorant is preferably an organic pigment selected from the group consisting of quinacridone organic pigments, diketopyrrolopyrrole organic pigments, mono azo yellow organic pigments, condensed azo organic pigments, quinophthalone organic pigments, benz-imidazolone organic pigments, and disazo yellow organic pigments.

Further, in the above described material, the water-insoluble colorant is more preferably a solid-solution pigment containing two or more kinds of quinacridone compounds selected from the group consisting of unsubstituted quinacridone, 2,9-dimethylquinacridone, 2,9-dichloroquinacridone and 3,10-dichloroquinacridone.

In the dispersion of the present invention, the water-insoluble colorant preferably contains two or more kinds of organic pigment ingredients. A content of the water-insoluble colorant in the dispersion is not particularly limited. In consideration of application to an ink, for example, it is preferably from 0.01% by mass to 30% by mass, more preferably from 1.0% by mass to 20% by mass, and most preferably from 1.1% by mass to 15% by mass.

In the dispersion of the present invention, even though a concentration of the dispersion is high, the viscosity of the dispersion can be kept at low level. For example, when the dispersion is used as a recording liquid, if the viscosity of the dispersion is at low level even though a concentration is high, the freedom degree of the kind and addition amount of additives that can be used in the recording liquid is increased. Accordingly, the dispersion according to the present invention can be used favorably as a recording liquid.

A combination of two or more kinds of water-insoluble colorant is not particularly limited. However, it is preferred to combine the same type of organic compounds such as a combination of azo-series organic pigments, or a combination of diketopyrrolopyrrole-series organic pigments. In other words, it is preferred to use a combination of organic pigments having a similar skeleton to each other. Specifically, there are preferable combinations such as C.I. pigment violet 19 and C.I. pigment red 122; C.I. pigment violet 19, C.I. pigment red 122 and C.I. pigment red 209; C.I. pigment yellow 128 and C.I. pigment yellow 74; and C.I. pigment yellow 128 and C.I. pigment orange 13. Further, it is preferred to use at least another kind of organic pigment that is different by the range of 10 nm to 200 nm, especially from 10 nm to 100 nm from the maximum absorption wavelength (λmax) of one organic pigment of two or more kinds of organic pigment components. It should be noted that the absorption wavelength of the pigment used in the present invention means a wavelength in the state of particles, namely the state of particles coated on or incorporated in a medium, but it does not mean a wavelength in the state of solution of the pigment dissolved in a specific medium such as alkali or acid.

The maximum absorption wavelength (λmax) of a primary organic pigment component is not particularly limited.

However, it is practical in a coloring application to use organic pigment compounds having the maximum absorption wavelength within the visible light region. For example, it is preferred to use an organic pigment compound having the maximum absorption wavelength in the range of 300 nm to 750 nm.

The content of each pigment in the mixture of two or more kinds of pigments is not particularly limited, but the mass ratio of the two pigments is preferably 0.5:9.5 to 9.5:0.5, more preferably 1:9 to 9:1, and still more preferably 2:8 to 8:2, for obtaining a color in a color gamut different from that of a single kind of pigment. Although it is possible to prepare the dispersion at a ratio outside the range of 0.5:9.5 to 9.5:0.5, the color obtained becomes almost the same as the color exhibited by the single kind of pigment. If three kinds of pigments are used, each pigment is preferably contained in an amount of 5 to 90 mass %, more preferably 10 to 80 mass %, with respect to the total amount of the pigments.

The dispersion according to the present invention contains a polymer compound having at least one repeating unit selected from the repeating units represented by Formula (1) or (2) (particular polymer compound).

In formula (1), $R^6$ to $R^8$ each independently represent a hydrogen atom or a substituent; X- is an anion group balancing with the cation electric charge on the nitrogen atom; $R^1$ represents a hydrogen atom or a substituent; J represents -CO-, - COO-, $-CONR^{10}-$, -OCO-, or a methylene group, a phenylene group, or $-C_6H_4CO-$; $R^{10}$ represents a hydrogen atom, an alkyl group, an aryl group, or an aralkyl group; W represents a single bond or a divalent linking group.

In formula (2), $R^9$ represents a hydrogen atom or a substituent; $Q_2$ represents a group of atoms which is necessary for forming an unsaturated ring together with a carbon atom and a nitrogen atom; $R^1$, $X^-$, J, and W have the same meanings as those in formula (1), respectively

$R^6$ to $R^8$ may be the same as or different from each other and each independently represents a hydrogen atom or a substituent group, and examples of favorable substituent groups include straight-chain, branched or cyclic unsubstituted alkyl groups having 1 to 18 carbon atoms such as a methyl group, an ethyl group, a propyl group, an isopropyl group, a butyl group, an isobutyl group, a sec-butyl group, a tert-butyl group, a pentyl group, a pentyl group, a neopentyl group, a hexyl group, an isohexyl group, a decyl group, a dodecyl group, an octadecyl group, a cyclopentyl group and a cyclohexyl group; and substituted alkyl groups thereof, i.e., such unsubstituted alkyl group of which one or more hydrogen atoms are substituted with substituents such as aryl groups such as a phenyl group, disubstituted amino groups such as a dimethylamino group, a nitro group, a cyano group, a carboxyl group, acyl groups such as a formyl group and an acetyl group, alkoxy groups such as a methoxy group, an ethoxy group and 2-methoxyethoxy group, alkenyl groups such as a vinyl group, and a hydroxyl group, specific examples thereof including 1-methoxyethyl group, 2-(dimethylamino)methyl group, a benzyl group, 1-phenylethyl group, 2-phenylethyl group, 2-methoxyethyl group, 2-(2-methoxyethoxy)ethyl group, an allyl group and the like. An alkyl group, an aryl group and an aralkyl group are more preferable, especially from the viewpoint of dispersion stability, and alkyl groups having 1 to 8 carbon atoms are particularly favorable for improvement in dispersion stability during long-term storage and during long-term heating.

$X^-$ represents an anion neutralizing the cation electric charge on nitrogen. Regarding with the anions, all the organic or inorganic anion species are nominated and specific examples include organic carboxylic acids, organic sulfonic acids, organic disulfonamides, halogen (chlorine, bromine, iodine), and inorganic anion species (tetrafluoroborate, hexafluorophosphate). However in the present invention, those being capable of adopting all anionic structure may be used without being limited thereto. More preferably, $X^-$ is a halogen ion or an inorganic anion for improvement of the dispersion stability, and tetrafluoroborate and hexafluorophosphate are particularly favorable, for further improvement of the adsorption force of the polymer compound on the water-insoluble colorant according to the present invention.

Although the reason is not entirely understood, use of the inorganic anion makes the polymer compound according to the present invention more hydrophobic, strengthening the interaction with the water-insoluble colorant. It is considered that, as a result, the adsorption force of the polymer compound on the water-insoluble colorant is also increased.

$R^1$ preferably represents a hydrogen atom, an alkyl group, or an aryl group, more preferably a hydrogen atom or an alkyl group, particularly preferably a hydrogen atom or an alkyl group having 1 to 8 carbon atoms.

J represents -CO-, -COO-, $-CONR^{10}-$, -OCO-, a methylene group, a phenylene group, or $-C_6H_4CO-$. Among them, -CO-, $-CONR^{10}-$, a phenylene group, or $-C_6H_4CO-$are preferable; $-C_6H_4CO-$ is more preferable. $R^{10}$ represents a hydrogen atom, an alkyl group, an aryl group or an aralkyl group; it is preferably the hydrogen atom, the alkyl group, or the aryl group. The alkyl group is preferably an alkyl group having 1 to 30 carbon atoms, more preferably 1 to 20 carbon atoms, and most preferably 1 to 10 carbon atoms; and preferred examples thereof include methyl, ethyl, isopropyl, tert-butyl, n-octyl, n-decyl, and n-hexadecyl. The aryl group is preferably an aryl group having 6 to 30 carbon atoms, more preferably 6 to 20 carbon atoms, and most preferably 6 to 12 carbon atoms; and preferred examples thereof include phenyl, p-methylphenyl, naphthyl, and anthranyl.

W represents a single bond or a divalent linking group.

Examples of the divalent linking group represented by W include an imino group, a straight-chain, branched or cyclic alkylene group (preferably an alkylene group having 1 to 30 carbon atoms, more preferably 1 to 12 carbon atoms, and further preferably 1 to 4 carbon atoms, e.g., methylene, ethylene, propylene, butylene, pentylene, hexylene,

octylene, and decylene), an aralkylene group (preferably an aralkylene group having 7 to 30 carbon atoms, and more preferably 7 to 13 carbon atoms, e.g., benzylidene and cinnamylidene), an arylene group (preferably an arylene group having 6 to 30 carbon atoms, and more preferably 6 to 15 carbon atoms, e.g., phenylene, cumenylene, mesitylene, tolylene and xylylene), $-(CR_{11}R_{12})_n$NHCONH-, and $-(CR_{11}R_{12})_n$CONH- ($R_{11}$ and $R_{12}$ represent a hydrogen group or a substituent, preferably a hydrogen atom, an alkyl group, a halogen atom, or a hydroxyl group, more preferably a hydrogen atom or an alkyl group, furthermore preferably a hydrogen atom. Herein, $R^{11}$ and $R^{12}$ each independently represent a hydrogen atom or a substituent. The substituent preferably represents a hydrogen atom, an alkyl group, a halogen atom, or a hydroxyl group, more preferably a hydrogen atom or an alkyl group, furthermore preferably a hydrogen atom. $R^{11}$s and $R^{12}$s may be the same or different from each other. n represents a positive integer, and preferably 1 to 10, more preferably 2 to 5. Among them, $-(CR^{11}R^{12})_n$NHCONH-, $-(CR^{11}R^{12})_n$CONH-, and an imino group are preferable, and an imino group is more preferable.

W preferably represents a single bond, alkylene group, or arylene group, more preferably a single bond or alkylene group, furthermore preferably a single bond.

W may further have a substituent. The substituent includes a monovalent substituent. That is, as examples of the substituent, the substituent group Z, includes an alkyl group (preferably an alkyl group having 1 to 30 carbon atoms, more preferably 1 to 20 carbon atoms, and particularly preferably 1 to 10 carbon atoms, e.g., methyl, ethyl, isopropyl, tert-butyl, n-octyl, n-decyl, n-hexadecyl), a cycloalkyl group (preferably a cycloalkyl group having 3 to 30 carbon atoms, more preferably 3 to 20 carbon atoms, and particularly preferably 3 to 10 carbon atoms, e.g., cyclopropyl, cyclopentyl, cyclohexyl), an alkenyl group (preferably an alkenyl group having 2 to 30 carbon atoms, more preferably 2 to 20 carbon atoms, and particularly preferably 2 to 10 carbon atoms, e.g., vinyl, allyl, 2-butenyl, 3-pentenyl), an alkynyl group (preferably an alkynyl group having 2 to 30 carbon atoms, more preferably 2 to 20 carbon atoms, and particularly preferably 2 to 10 carbon atoms, e.g., propargyl, 3-pentynyl), an aryl group (preferably an aryl group having 6 to 30 carbon atoms, more preferably 6 to 20 carbon atoms, and particularly preferably 6 to 12 carbon atoms, e.g., phenyl, p-methylphenyl, naphthyl, anthranyl),

an amino group (preferably an amino group having 0 to 30 carbon atoms, more preferably 0 to 20 carbon atoms, and particularly preferably 0 to 10 carbon atoms, e.g., amino, methylamino, dimethylamino, diethylamino, dibenzylamino, diphenylamino, ditolylamino), an alkoxy group (preferably an alkoxy group having 1 to 30 carbon atoms, more preferably 1 to 20 carbon atoms, and particularly preferably 1 to 10 carbon atoms, e.g., methoxy, ethoxy, butoxy, 2-ethylhexyloxy), an aryloxy group (preferably an aryloxy group having 6 to 30 carbon atoms, more preferably 6 to 20 carbon atoms, and particularly preferably 6 to 12 carbon atoms, e.g., phenyloxy, 1-naphthyloxy, 2-naphthyloxy), a heterocyclicoxy group (preferably a heterocyclicoxy group having 1 to 30 carbon atoms, more preferably 1 to 20 carbon atoms, and particularly preferably 1 to 12 carbon atoms, e.g., pyridyloxy, pyrazyloxy, pyrimidyloxy, quinolyloxy),

an acyl group (preferably an acyl group having 1 to 30 carbon atoms, more preferably 1 to 20 carbon atoms, and particularly preferably 1 to 12 carbon atoms, e.g., acetyl, benzoyl, formyl, pivaloyl), an alkoxycarbonyl group (preferably an alkoxycarbonyl group having 2 to 30 carbon atoms, more preferably 2 to 20 carbon atoms, and particularly preferably 2 to 12 carbon atoms, e.g., methoxycarbonyl, ethoxycarbonyl), an aryloxycarbonyl group (preferably an aryloxycarbonyl group having 7 to 30 carbon atoms, more preferably 7 to 20 carbon atoms, and particularly preferably 7 to 12 carbon atoms, e.g., phenyloxycarbonyl), an acyloxy group (preferably an acyloxy group having 2 to 30 carbon atoms, more preferably 2 to 20 carbon atoms, and particularly preferably 2 to 10 carbon atoms, e.g., acetoxy, benzoyloxy), an acylamino group (preferably an acylamino group having 2 to 30 carbon atoms, more preferably 2 to 20 carbon atoms, and particularly preferably 2 to 10 carbon atoms, e.g., acetylamino, benzoylamino),

an alkoxycarbonylamino group (preferably an alkoxycarbonylamino group having 2 to 30 carbon atoms, more preferably 2 to 20 carbon atoms, and particularly preferably 2 to 12 carbon atoms, e.g., methoxycarbonylamino), an aryloxycarbonylamino group (preferably an aryloxycarbonylamino group having 7 to 30 carbon atoms, more preferably 7 to 20 carbon atoms, and particularly preferably 7 to 12 carbon atoms, e.g., phenyloxycarbonylamino), a sulfonylamino group (preferably a sulfonylamino group having 1 to 30 carbon atoms, more preferably 1 to 20 carbon atoms, and particularly preferably 1 to 12 carbon atoms, e.g., methanesulfonylamino, benzenesulfonylamino), a sulfamoyl group (preferably a sulfamoyl group having 0 to 30 carbon atoms, more preferably 0 to 20 carbon atoms, and particularly preferably 0 to 12 carbon atoms, e.g., sulfamoyl, methylsulfamoyl, dimethylsulfamoyl, phenylsulfamoyl),

a carbamoyl group (preferably a carbamoyl group having 1 to 30 carbon atoms, more preferably 1 to 20 carbon atoms, and particularly preferably 1 to 12 carbon atoms, e.g., carbamoyl, methylcarbamoyl, diethylcarbamoyl, phenylcarbamoyl), an alkylthio group (preferably an alkylthio group having 1 to 30 carbon atoms, more preferably 1 to 20 carbon atoms, and particularly preferably 1 to 12 carbon atoms, e.g., methylthio, ethylthio), an arylthio group (preferably an arylthio group having 6 to 30 carbon atoms, more preferably 6 to 20 carbon atoms, and particularly preferably 6 to 12 carbon atoms, e.g., phenylthio), a heterocyclicthio group (preferably a heterocyclicthio group having 1 to 30 carbon atoms, more preferably 1 to 20 carbon atoms, and particularly preferably 1 to 12 carbon atoms, e.g., pyridylthio, 2-benzimidazolylthio, 2-benzoxazolylthio, 2-benzothiazolylthio),

a sulfonyl group (preferably a sulfonyl group having 1 to 30 carbon atoms, more preferably 1 to 20 carbon

atoms, and particularly preferably 1 to 12 carbon atoms, e.g., mesyl, tosyl), a sulfinyl group (preferably a sulfinyl group having 1 to 30 carbon atoms, more preferably 1 to 20 carbon atoms, and particularly preferably 1 to 12 carbon atoms, e.g., methanesulfinyl, benzenesulfinyl), a ureido group (preferably a ureido group having 1 to 30 carbon atoms, more preferably 1 to 20 carbon atoms, and particularly preferably 1 to 12 carbon atoms, e.g., ureido, methylureido, phenylureido), a phosphoric acid amido group (preferably a phosphoric acid amido group having 1 to 30 carbon atoms, more preferably 1 to 20 carbon atoms, and particularly preferably 1 to 12 carbon atoms, e.g., diethylphosphoric acid amido, phenylphosphoric acid amido), a hydroxyl group, a mercapto group, a halogen atom (e.g., a fluorine atom, a chlorine atom, a bromine atom, an iodine atom; more preferably a fluorine atom),

a cyano group, a sulfo group, a carboxyl group, an oxo group, a nitro group, a hydroxamic acid group, a sulfino group, a hydrazino group, an imino group, a heterocyclic group (preferably a heterocyclic group having 1 to 30 carbon atoms, and more preferably 1 to 12 carbon atoms; as hetero atoms, e.g., nitrogen, oxygen, sulfur; and specifically, e.g., imidazolyl, pyridyl, quinolyl, furyl, thienyl, piperidyl, morpholino, benzoxazolyl, benzimidazolyl, benzothiazolyl, carbazolyl, azepinyl), a silyl group (preferably a silyl group having 3 to 40 carbon atoms, more preferably 3 to 30 carbon atoms, and particularly preferably 3 to 24 carbon atoms, e.g., trimethylsilyl, triphenylsilyl), and a silyloxy group (preferably a silyloxy group having 3 to 40 carbon atoms, more preferably 3 to 30 carbon atoms, and particularly preferably 3 to 24 carbon atoms, e.g., trimethylsilyloxy, triphenylsilyloxy).

W may be a divalent linking group formed by combining two or more groups selected from the aforementioned groups for W. In addition, W favorably has an ether bond therein.

Favorable examples of $R^9$ include groups similar to those described above for $R^6$ to $R^8$.

$Q_2$ represents an atom group needed for forming an unsaturated ring together with carbon atoms and nitrogen atoms, and examples of such rings include nitrogen-containing heterocyclic groups described below.

Examples of the nitrogen-containing heterocyclic groups favorably used in the present invention among the heterocyclic groups above include 4- to 10-membered aromatic mono- or bi-cyclic nitrogen-containing heteroaryl groups having 1 to 3 nitrogen atoms. Typical examples thereof include a pyrrolyl group, an imidazolyl group, a pyrazolyl group, a triazolyl group, a tetrazolyl group, a pyridyl group, a pyridazyl group, a pyrimidyl group, a pyrazyl group, a triazyl group, an indolyl group, an isoindolyl group, a benzimidazolyl group, a benzopyrazolyl group, a pyrrolopyridyl group, an imidazopyridyl group, an oxazolyl group, anoxazolium group, a benzoxazolium group, a thiazolium group, a benzothiazolium group, a quinolyl group, a quinolium group, an isoquinolyl group, a quinoxalyl group and the like; a pyridyl group, an imidazolyl group, a pyrazolyl group, a triazolyl group, a tetrazolyl group and a thiazolium group, an oxazole group and a quinolyl group are preferable; and an imidazolyl group, a pyridyl group and a quinolyl group are more preferable.

The nitrogen-containing heterocyclic group according to the present invention may be substituted. Examples of the substituent groups include alkyl or alkyl thio groups having 1 to 20 carbon atoms (such as methyl, ethyl, n-propyl and n-butyl), aryl groups having 1 to 20 carbon atoms (such as phenyl, 1-naphthyl and 2-naphthyl), halogen atoms (such as chlorine, bromine, iodine and fluorine atoms), a nitro group, alkoxy groups (such as methoxy and ethoxy), aryloxy groups (such as phenoxy), an amide group, an alkynyl group, an alkenyl group, a carbamoyl group, a sulfo group, a hydroxy group and a carboxy group, and the like. The substituent group is preferably an alkyl group, a halogen atom or an alkylthio group.

Examples of the substituted pyridyl group include 2-(3-methyl)pyridyl group, 3-(2-methyl)pyridyl group, 4-(2-methyl)pyridyl group, 2-(4-ethyl)pyridyl group, 2,6-dimethylpyridyl group, 2-methyl-6-ethylpyridyl group, 3-(2-butyl)pyridyl group, 4-(3-propyl)pyridyl group, 2-(3-chloro)pyridyl group, 3-(2-chloro)pyridyl group, 4-(2-chloro)pyridyl group, 2-(3-bromo)pyridyl group, 3-(4-bromo)pyridyl group, 2-(5-iodo)pyridyl group, 2-(3-methylthio)pyridyl group, 3-(2-methylthio)pyridyl group, and 4-(2-ethylthio)pyridyl group. Examples of the substituted quinolyl group include 2-(3-methyl)quinoline, 4-(2-methyl)quinoline, 5-(2-methyl)quinoline, 6-(4-methyl)quinoline, 3-(2-ethyl)quinoline, 8-(3-propyl)quinoline, 2-(3-chloro)quinoline, 2-(3-fluoro)quinoline, 4-(2-chloro)quinoline, 6-(2-chloro)quinoline, 2-(3-bromo)quinoline, 3-(4-bromo)quinoline, 2-(6-iodo)quinoline, 2-(3-methylthio)quinoline, 6-(2-methylthio)quinoline, 4-(2-ethylthio)quinoline, and 6-(2-phenylthio)quinoline. Examples of the substituted thiazolyl group include 2-(4-methyl)thiazolyl group, 2-(4,5-dimethyl)thiazolyl group, and 2-(4-phenyl)thiazolyl group. Examples of the substituted thiazolium group include 2-(3-methyl)thiazolium group, and 2-(3,4-dimethyl)thiazolium group. Examples of the substituted benzothiazolyl group include 2-(5-chloro)benzothiazolyl group, 2-(5,6-dimethyl)benzothiazolyl group, 4-(2-methyl)benzothiazolyl group, 5-(2-methyl)benzothiazolyl group, and 7-(2-methyl)benzothiazolyl group. Examples of the substituted benzothiazolium group include 2-(3-methyl)benzothiazolium group, and 4-(2,3-dimethyl)benzothiazolium group. Examples of the substituted oxazolyl group include 2-(4-methyl)oxazolyl group, 2-(4,5-dimethyl)oxazolyl group, and 2-(4-phenyl)oxazolyl group. Examples of the substituted oxazolium group include 2-(3-methyl)oxazolium group, and 2-(3,4-dimethyl)oxazolium group. Examples of the substituted benzooxazolyl group include 2-(5-chloro)benzooxazolyl group, 2-(5,6-dimethyl)benzooxazolyl group, and 4-(2-methyl-5-phenyl)benzooxazolyl group. Examples of the substituted benzooxazolium group include 2-(3-methyl)benzooxazolium group, and 4-(2,3-dimethyl)benzooxazolium group. Examples of the substituted imidazolyl group include 1-methylimidazolyl group, 1,2-dimethylimidazolyl group, 1-ethylimidazolyl group, 1-propylimidazolyl group, 1-butylirnidazolyl group, 1-pentylimidazolyl group, 1-hexylimidazolyl group, 2-(1,4-dimethyl)imidazolyl group, and 2-(4,5-dimethyl)imidazolyl group. Examples of the substituted imidazolium group include 2-(1,3-dimethyl)imidazolium group, and 2-(1,3-diethyl)imidazolium group. Examples of the substituted benzoimidazolyl group include 2-(1-methyl) benzooxazolyl group, 2-(1,6-dimethyl)benzoimidazolyl group, and 4-(1,2-dimethyl)benzoimidazolyl group. Examples of the substituted benzoimidazolium group include 2-(1,3-dimethyl)benzoimidazolium group, 4-(1,2,3-trimethyl)benzoimidazolium group.

The terminal group of the particular polymer compound is not particularly limited and may be a hydrogen atom or a polymerization terminator residue.

It is preferable that the particular polymer compound further has a structural unit containing at least one acid group or an alkyleneoxide group as its hydrophilic part. In particular, the particular polymer compound preferably has a structural unit having an acid group selected from the group consisting of a carboxylic acid group, a sulfonic acid group, a phosphoric acid group and a hydroxyl group, more preferably a structural unit containing an acid group selected from the group consisting of a carboxylic acid group and a sulfonic acid group, and particularly preferably a structural unit having a carboxylic acid group. A polymer compound prepared by copolymerizing monomers having those acidic group salt and hydrophilic monomer components such as vinyl ethers and allyl ethers each having a polyether chain (e.g., polyoxyethylene alkylether, polyoxyethylene higher fatty acid ester, and polyoxyethylene alkyl phenyl ether) at those side-chains. Regarding with the polymerization method, there is no limitation, in particular, generally in any of radical polymerization, ionic polymerization, living polymerization, and coordinating polymerization; solutions as the medium; and measure such as bulk, emulsification. The radical polymerization with solution is preferable in the viewpoint of being convenient of manipulation.

The particular polymer compound for use in the dispersion according to the present invention is preferably a compound having a repeating unit represented by the following Formula (3) or (4).

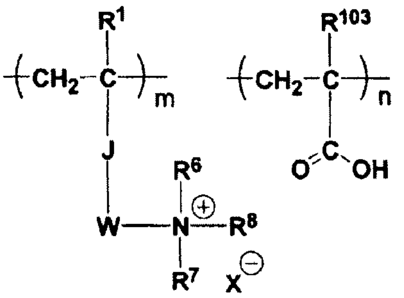

Formula (3)

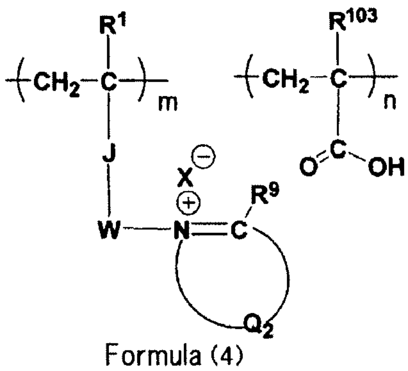

Formula (4)

$R^6$ to $R^9$, $X^-$, $R^1$, J, W, $Q^2$ have the same meanings as those in formula (I) above, and the favorable ranges thereof are also the same as those described for formula (I). $R^{103}$ represents a hydrogen atom or a methyl group. m and n each represent a mass composition ratio. m + n = 100.

m is preferably 30 to 70 (mass composition ratio), more preferably 30 to 60 (mass composition ratio). n is preferably 30 to 70 (mass composition ratio), more preferably 40 to 70 (mass composition ratio).

The terminal group of the particular polymer compound represented in Formula (3) or (4) is not particularly limited and may be a hydrogen atom or a polymerization terminator residue.

In addition, the particular polymer compound for use in the dispersion according to the present invention preferably has a hydrophobic unit (hydrophobic group-containing repeating unit), and use of a copolymer prepared by copolymerization components of a hydrophilic monomer and a hydrophobic monomer is preferable. The particular polymer compound can have an increased adsorption force on the water-insoluble colorant by containing such a hydrophobic monomer.

The hydrophobic monomer component is, for example, a monomer component having, as its structural unit, a hydrophobic unit such as a long-chain alkyl group having 8 or more carbon atoms or a t-butyl group, phenyl group, biphenyl group or naphthyl group. For providing a water-insoluble colorant with high dispersion stability, monomer components containing block segments having a hydrophobic monomer such as styrene or stearyl methacrylamide as the repeating unit are preferable, but the hydrophobic monomer component is not limited thereto.

The particular polymer compound is preferably a copolymer obtained by copolymerization of the monomer components described above. The above polymer compound may be a copolymer which has any form of block-copolymer, random copolymer, or graft copolymer. Use of the block-copolymer, or graft copolymer is especially preferable since those copolymers readily impart a favorable dispersibility to a water-insoluble colorant.

It should be noted that the term "hydrophilic" means a good affinity with water and a high water solubility,

whereas the "hydrophobic" means a poor affinity with water and a sparse water solubility.

The particular polymer compound for use in the dispersion according to the present invention is preferably a compound having a repeating unit represented by the following Formula (5) or (6).

Formula (5)

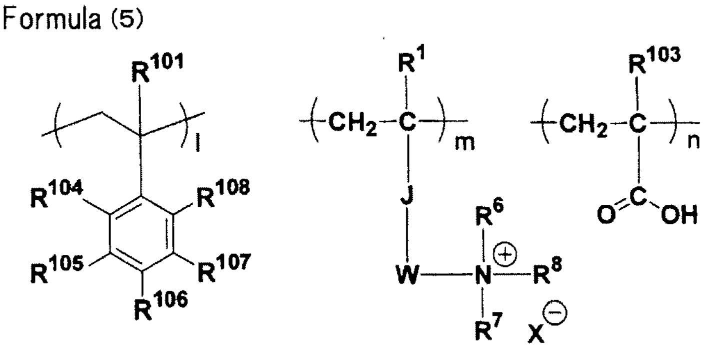

Formula (6)

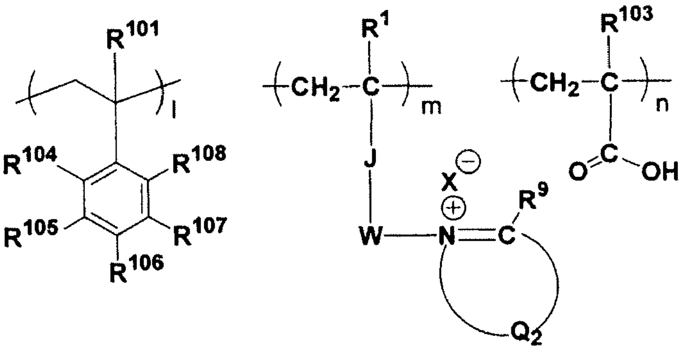

$R^6$ to $R^9$, $X^-$, $R^1$, J, W, $Q^2$ have the same meanings as those in formula (I) above, and the favorable ranges thereof are also the same as those described for formula (I). $R^{103}$ represents a hydrogen atom or a methyl group.

$R^{101}$ and $R^{103}$ each independently represent a hydrogen atom or a methyl group. $R^{104}$ to $R^{108}$ each independently represents a hydrogen atom, or a substituted or unsubstituted, alkyl group, alkoxy group, halogen group, hydroxy group, thioalkoxy group, ester group, amido group, ketone group, cyano group, aryl group or heteroaryl group. 1, m and n each independently represents a mass composition ratio of the repeating unit respectively, and 1 + m + n = 100. $R^{104}$~$R^{108}$ may combine to form an aliphatic or an aromatic ring from each other.

1 is preferably 20 to 60 (mass composition ratio), more preferably 30 to 50 (mass composition ratio). m is preferably 5 to 75 (mass composition ratio), more preferably 15 to 45 (mass composition ratio), particularly preferably 15 to 35 (mass composition ratio). n is preferably 10 to 50 (mass composition ratio), more preferably 20 to 40 (mass composition ratio).

The terminal group of the particular polymer compound represented in Formula (5) or (6) is not particularly limited and may be a hydrogen atom or a polymerization terminator residue.

Next, the following compounds (D-1) to (D-33) are exemplified as the preferred specific polymer dispersant used in the present invention; however, the present invention is not limited to those. Additionally in the Formula, Hex represents a hexyl group, Ph represents a phenyl group, Me represents a methyl group, Et represents an ethyl group, Bu represents a butyl group, and Bn represents a benzyl group respectively.

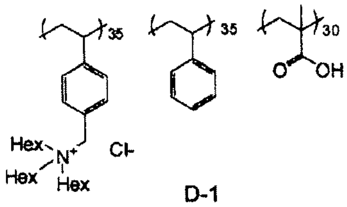

D-1

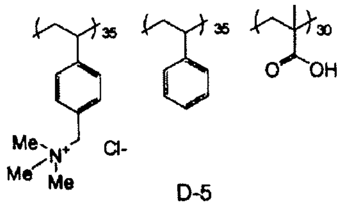

D-5

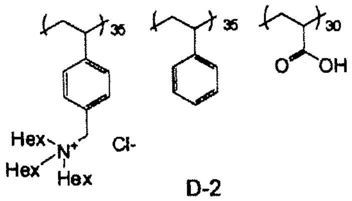

D-2

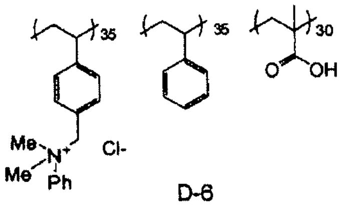

D-6

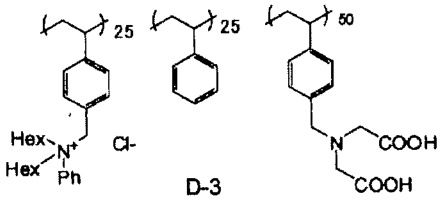

D-3

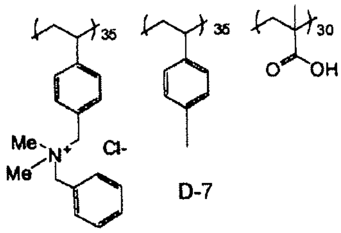

D-7

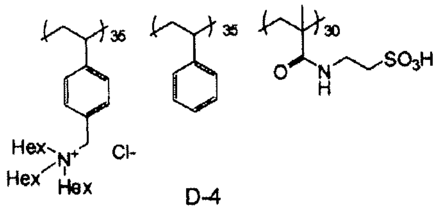

D-4

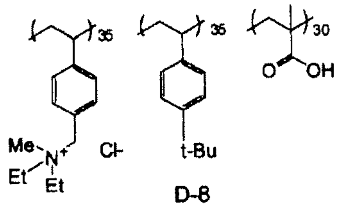

D-8

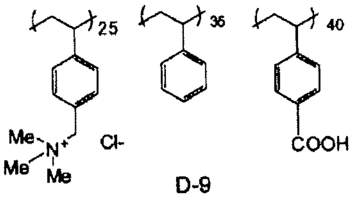

D-9

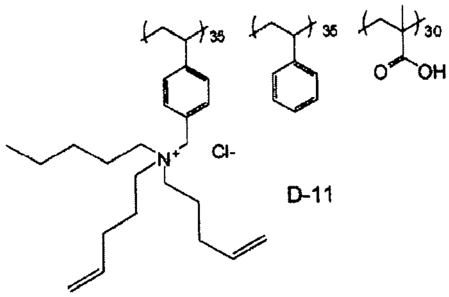

D-11

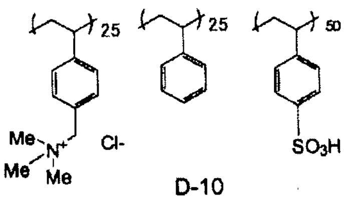

D-10

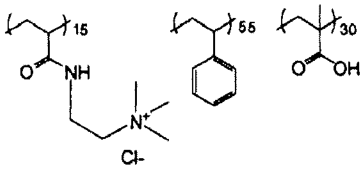

D-12

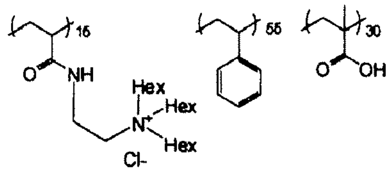

D-16

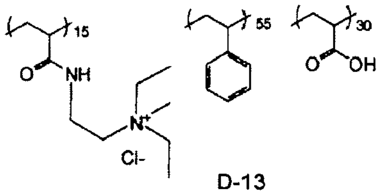

D-13

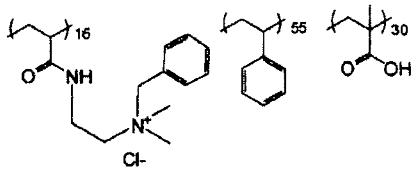

D-17

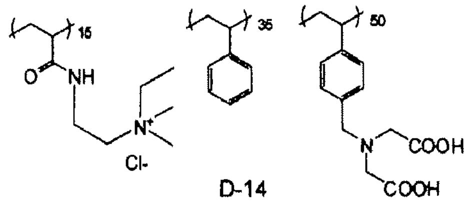

D-14

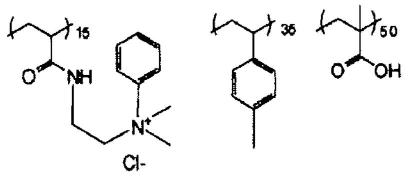

D-18

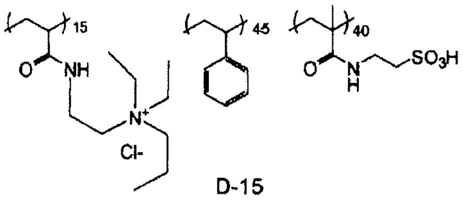

D-15

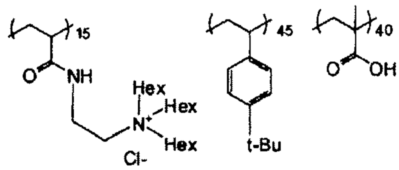

D-19

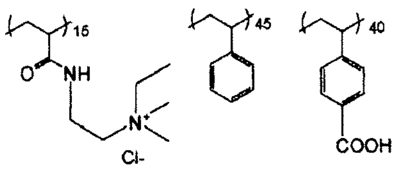
D-20

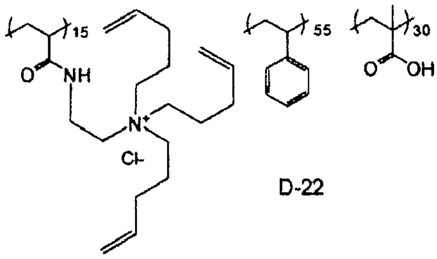
D-22

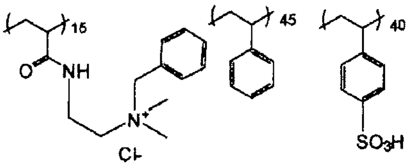
D-21

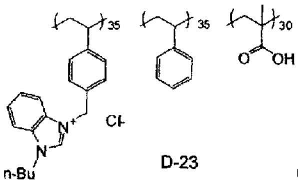
D-23

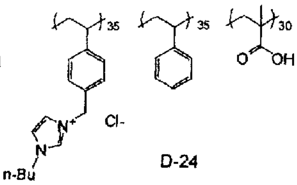
D-24

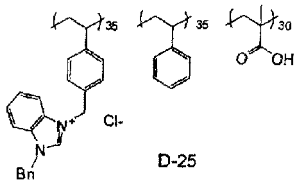
D-25

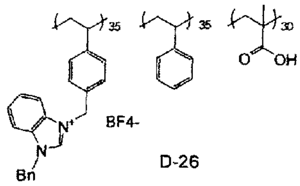
D-26

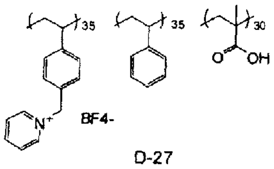
D-27

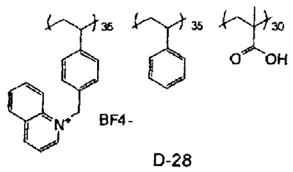
D-28

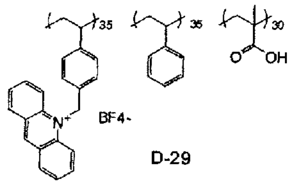
D-29

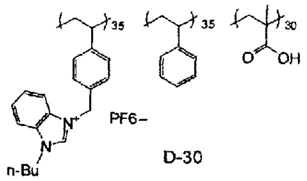
D-30

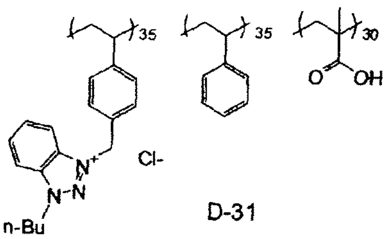
D-31

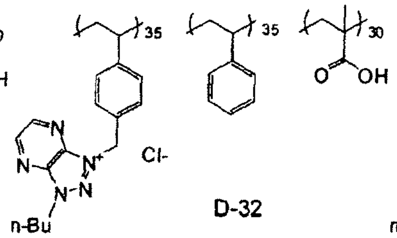
D-32

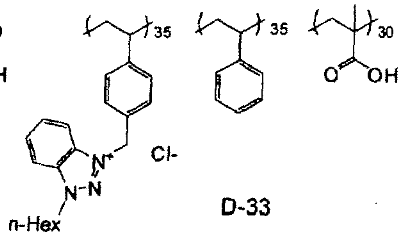
D-33

The acid value of the particular polymer compound is preferable in the range of 50 mg-KOH/g to 300 mg-KOH/g, more preferably in the range of 100 mg-KOH/g to 270 mg-KOH/g, and particularly preferable in the range of 150 mg-KOH/g to 250 mg-KOH/g, for expansion of the flexibility of the medium used for dispersion (freedom degree in selecting the medium).

In addition, the molecular weight of the particular polymer compound is not particularly limited, but the mass-average molecular weight thereof, if it is a polymer compound, is preferably 1,000 to 100,000, more preferably 5,000 to

50,000. When the molecular mass is too large, entanglement among polymeric chains becomes too large. As a result, it becomes difficult for them to serve as a dispersing agent, which occasionally makes it difficult to maintain a good dispersion state. It should be noted that when described simply as a molecular mass in the present invention, the molecular mass means mass average molecular mass, unless otherwise specified, measured by the following condition. The favorable range in molecular weight of other polymer compound described later is the same as the range above.
In the present specification, the molecular weight and the degree of dispersion are values measured by the following measuring methods.

[Measuring methods for molecular weight and degree of dispersion]

The molecular weight and the degree of dispersion are measured using GPC (gel permeation chromatography) method, unless otherwise specified. It is preferred that the gel packed in the column used for the GPC method is a gel having an aromatic compound in the repeating unit, and an example thereof is a gel comprising a styrene/divinylbenzene copolymer. It is preferred to use two to six columns connected together. Examples of the solvent include ether-series solvents such as tetrahydrofuran; and amide-series solvents such as N-methylpyrrolidinone, and preferred is ether-series solvents such as tetrahydrofuran. The measurement is preferably performed at a solvent flow rate of 0.1 to 2 mL/min, and most preferably 0.5 to 1.5 mL/min. When the measurement is conducted within the range, the measurement can be performed more efficiently without imposing too much load to the measuring apparatus. The measurement is preferably performed at a temperature of 10 to 50 °C and, more preferably 20 to 40 °C.
In the following, the specific conditions for the measurement of molecular weight are shown.

Apparatus: HLC-8220GPC (trade name, manufactured by Tosoh Corporation)
Detector: Differential refractometer (RI detector)
Precolumn: TSKGUARDCOLUMN MP(XL),
6 mm x 40 mm (manufactured by Tosoh Corporation)
Sample-side column: The following column was used, and two columns were directly connected (all manufactured by Tosoh Corp.). TSK-GEL Multipore-HXL-M 7.8 mm x 300 mm
Reference-side column: Same as the sample-side column.
Thermostatic bath temperature: 40 °C
Moving bed: Tetrahydrofuran
Flow rate of sample-side moving bed: 1.0 mL/min
Flow rate of reference-side moving bed: 0.3 mL/min
Sample concentration: 0.1 wt%
Amount of sample injected: 100 μL
Data sampling time: 16 to 46 minutes after sample injection
Sampling pitch: 300 msec

The content of the particular polymer compound in the dispersion according to the present invention is not particularly limited, and preferably 5 to 90% by mass, more preferably 10 to 80% by mass, with respect to the total amount of the dispersion. The mass ratio thereof to the water-insoluble colorant (D/P ratio) is preferably 0.01 to 2.0, more preferably 0.1 to 1.0, still more preferably 0.1 to 0.5, and particularly preferably 0.1 to 0.3. It is speculated that, with the amount in the above range, the polymer compound fully brings out unique interactions between it and the water-insoluble colorant, when it is used to function as a dispersant in an ink composition containing a hydrophobic organic solvent. On the other hand, there exists no extra products which float in the dispersion medium adversely affecting ink properties. Thus, it significantly enhances improvement of ink properties,
**[0069]** The containing mode in the dispersion of the polymer compound is not limited in particular, and either being contained independently from other component or being collectively contained together with another component may be suitable. Thus, in the present invention, the terminology "dispersion containing the water-insoluble-colorant fine particles together with the particular polymer compound" means that the particular polymer compound may be contained in the water-insoluble-colorant fine particles in the dispersion or may coexist separately from the fine particles in the dispersion. Accordingly, the state in which a part of the polymer compound may be in dissociation equilibrium between adsorption on and release from the fine particles, is also included in the above concept of containing mode. In the dispersion according to the present invention, it is preferable that the polymer compound coexists particularly during generation of fine particles in the reprecipitation method described below, thus embedding the polymer compound into or making it strongly adsorbed on the fine particles and thus, making it resistant to release, for example, by subsequent solvent substitution. It should be also noted that the term "dispersion" that is used in the present invention means a composition having prescribed fine-particles dispersed therein. The form of the dispersion is not particularly limited. The dispersion is used as a meaning to embrace a liquid composition (dispersion liquid), a past-like composition, and a solid

composition.

The dispersion of the present invention is preferably produced by dissolving a water-insoluble colorant into an aprotic water-soluble organic solvent in the presence of alkali, and making the solution of the water-insoluble colorant and an aqueous medium to contact each other, to give a dispersion in which fine particles of the water-insoluble colorant are generated (this method may be referred to as build-up method). In this process, it is preferable that the particular polymer compound is contained in the solution of the water-insoluble colorant and/or the aqueous medium. Thus, the dispersion according to the present invention is preferably a dispersion prepared by build-up method. In the present invention, the build-up method is defined as a method of forming nanometer-size organic pigment particles from an organic compound or an organic compound precursor dissolved in a solvent (molecular dispersion) through chemical operation and processing without requiring any additional fining operation, such as a crushing operation. Although the build-up method is roughly classified into a vapor-phase method and a liquid-phase method, it is preferable in the present invention that the fine particles are formed according to a liquid-phase method.

The particular polymer compound is mainly used to function as an improver of particle dispersibility of the water-insoluble colorant (i.e. as a dispersing agent). Alternatively, it may also be used to function as a particle-formation or particle-growth adjustor during generation of particles in the reprecipitation method. From this point, the addition amount of the above particular polymer compound into the solution of the water-insoluble colorant and/or aqueous medium is preferably from 0.001 to 10,000 mass parts with respect to the water-insoluble colorant. It is more preferable to be from 0.05 to 1,000 mass parts, further preferable to be from 0.05 to 500 mass parts, and particularly preferable to be from 0.1 to 200 mass parts.

In the dispersion of the present invention, in addition to the above particular polymer compound, another polymer compound and/or low molecular weight compound may be concurrently used. With regard to the another polymer compound to be used, a polymer compound which is soluble into an aprotic organic solvent in the presence of alkali, and which exhibits, when a solution prepared by dissolving the water-insoluble colorant and the aforementioned dispersing agent and the aqueous medium are allowed to mix each other, the dispersion effect by forming particles containing the water-insoluble colorant in an aqueous medium is appropriately employable. Such a polymer compound is not particularly limited, and use can be made of, for example, polymer compounds having at least one kind of group selected from a carboxylic group, a sulfonic group and a phosphoric group as its hydrophilic part, and having the hydrophilic part and the hydrophobic part in the same molecule, and further being capable of achieving the object of the present invention. Preferably used are polymer compounds obtained by combining at least one monomer, as the hydrophobic part, selected from monomers represented by (meth)acrylic acid, maleic acid, itaconic acid, fumaric acid, β-CEA, styrene sulfonate, vinyl sulfonate, 4-vinylbenzene sulfonate, allyl sulfonate, 3-(meth)acryloyloxypropane sulfonate, 2-methylallyl sulfonate, 2-(meth)acryloyloxyethane sulfonate, 2-acrylamide-2-methylpropane sulfonate and salts of those, mono{2-(meth)acryloyloxy ethyl} acid phosphate, and 2-methacryloxyethyl phosphonate, together with at least one monomer selected from α-olefinic aromatic hydrocarbons having 8 to 20 carbon atoms such as styrene, 4-methylstyrene, 4-ethylstyrene, vinylnaphthalene, vinylnaphthalene derivatives; and vinylesters having 3 to 20 carbon atoms such as vinyl acetate and propionate vinyl; olefin carboxylic acid esters having 4 to 20 carbon atoms such as methyl methacrylate, ethyl methacrylate, propyl methacrylate, butyl methacrylate, benzyl methacrylate, 2-ethylhexyl methacrylate, stearyl methacrylate, methyl acrylate, ethyl acrylate, butyl acrylate, benzyl acrylate, 2-ethylhexyl acrylate, methyl crotonate, and ethyl crotonate; vinylic aromatic amines having 8 to 20 carbon atoms such as 4-vinylpyridine, and 4-vinyl aniline; vinylic amide compounds having 3 to 20 carbon atoms such as acrylamide, methacrylamide, and benzyl methacrylamide; olefin phenols having 8 to 20 carbon atoms such as 4-vinylphenol; and dienic compounds having 4 to 20 carbon atoms such as butadiene, and isoprene, in addition to those, polyfunctional monomers, macro-monomers, conventionally known monomers, and derivatives of these. Those other polymer compounds function as a dispersing agent, and only one kind of polymer compound may be used, or, alternatively, two or more kinds of polymer compounds may be used in combination.

The particular polymer compound and the polymer compound different from it preferably have a structural unit containing at least one kind of acid group as a hydrophilic unit. The acid group is preferably selected from a carboxylic acid group, a sulfonic acid group, and a phosphoric acid group. A polymer compound prepared by copolymerizing monomers having those acidic group salt and hydrophilic monomer components such as vinyl ethers and allyl ethers each having a polyether chain (e.g., polyoxyethylene alkylether, polyoxyethylene higher fatty acid ester, and polyoxyethylene alkyl phenyl ether) at those side-chains. Regarding with the polymerization method, there is no limitation, in particular, generally in any of radical polymerization, ionic polymerization, living polymerization, and coordinating polymerization; solutions as the medium; and measure such as bulk, emulsification. The radical polymerization with solution is preferable in the viewpoint of being convenient of manipulation.

When build-up method is used, the particular polymer compound according to the present invention and the other polymer compound are preferably dissolvable with the organic pigment stably in an aprotic organic solvent in the presence of alkali. In conventional pigment dispersion methods, it is necessary to select a appropriate dispersant that becomes in contact efficiently with the surface of the pigment in the dispersion state in a medium. In this regard, the particular polymer compound according to the present invention and/or the other polymer compound can be dissolved

in an aprotic organic solvent in the presence of alkali as stabilized with the organic pigment, so that the polymers are present with the pigment in the dissolving state in the medium, and consequently allowing desired interaction may easily be obtained between these compounds. Therefore, the kind of the polymer compounds is not restricted, as to whether the contact efficiency is brought onto pigment surface during operation as a restriction involved in conventional pigment dispersion methods, and thus a variety of polymer compounds can be used.

For the purpose of further enhancing the stability of the dispersion of the present invention, yet another dispersing agent (e.g. a surfactant, a polymer dispersing agent) can be also added, in addition to the aforementioned ones. Specifically, such a surfactant may be properly selected from any of known surfactants and derivatives thereof, including anionic surfactants, such as alkylbenzene sulfonic acid salts, alkylnaphthalene sulfonic acid salts, higher-fatty acid salts, sulfonic acid salts of higher fatty acid esters, sulfuric acid ester salts of higher alcohol ether, sulfonic acid salts of higher alcohol ether, alkylcarboxylic acid salts of higher alkylsulfonamide, and alkylphosphoric acid salts; nonionic surfactants, such as polyoxyethylene alkyl ethers, polyoxyethylenealkyl phenyl ethers, polyoxyethylene fatty acid esters, sorbitan fatty acid esters, ethyleneoxide adducts of acetylene glycol, ethyleneoxide adducts of glycerol, and polyoxyethylene sorbitan fatty acid esters; and in addition to the above, amphoteric surfactants, such as alkyl betaines and amido betaines; silicone-based surfactants, and fluorine-containing surfactants.

Specific examples of the polymer dispersing agent include polyvinyl pyrrolidone, polyvinyl alcohol, polyvinyl methyl ether, polyethylene oxide, polyethyleneglycol, polypropyleneglycol, and polyacrylamide. Among these, polyvinyl pyrrolidone is preferably used.

Further, as a polymer compound that can be used as yet another (polymer) dispersing agent, use can be preferably made of natural polymer compounds, such as albumin, gelatin, rosin, shellac, starch, gum Arabic, and sodium alginate; and their modified compounds. Further, these dispersing agents may be used singly, or in a combination of two or more. The amount of the other polymer compound and the surfactant is not particularly limited, but it is preferable, for example, to adjust the total amount in the favorable range of the particular polymer compound described above.

In order to improve light resistance when the dispersion of the present invention is used as an ink that is described later, the above-described polymer compounds, surfactants, and/or dispersing agents can be preferably used. It is especially preferred to use a polymer dispersing agent or a polymer compound, each of which is soluble or dispersible in a particular organic solvent that is used for a cleaning treatment that is explained later, in consideration of providing light resistance and maintaining the dispersion at a low viscosity level even though the dispersion is concentrated.

Any kind of aprotic organic solvent may be used in the present invention, so long as the solvent is able to dissolve the water-insoluble colorant and the polymer compound. Aprotic organic solvents having 5% by mass or more of solubility to water are preferably used. Furthermore, aprotic organic solvents that can be freely mixed with water are preferable.

Specifically, examples of preferable solvents include dimethylsulfoxide, di methylimidazolidinone, sulfolane, N-methyl pyrrolidone, dimethylformamide, N,N-d imethylacetoamide, acetonitrile, acetone, dioxane, tetramethylurea, hexamethylphosp horamide, hexamethylphosphoro triamide, pyridine, propionitrile, butanone, cyclohe xanone, tetrahydrofuran, tetrahydro pyran, ethyleneglycol diacetate, and γ-butyrolac tone. Of these solvents, dimethylsulfoxide, N-methyl pyrrolidone, dimethylforma mide, N,N-dimethylacetoamide, dimethylimidazolidinone, sulfolane, acetone, aceton itrile, and tetrahydrofuran are preferable; and dimethylsulfoxide and N-methyl pyr rolidone are more preferable. Further, these solvents may be used singly or in combination of two or more.

A proportion of the aprotic solvent to be used is not particularly limited. However, it is preferred to use the solvent in the proportion of 2 parts by mass to 500 parts by mass, more preferably from 5 parts by mass to 100 parts by mass, with respect to 1 part by mass of the water-insoluble colorant respectively, in order to improve a dissolution state of the water-insoluble colorant, to easily form fine particles having a desired particle size, and to improve a color density of aqueous dispersion.

The alkali used for dissolving the water-insoluble colorant may be any one. Particularly, hydroxide of alkali metal, alkoxide of alkali metal, hydroxide of alkaline-earth metal, alkoxide of alkaline-earth metal, and organic strong base may preferably be used in terms of high solubilizing ability for the water-insoluble colorant. Examples thereof include inorganic bases such as sodium hydroxide, potassium hydroxide, cesium hydroxide, lithium hydroxide, magnesium hydroxide, calcium hydroxide, and barium hydroxide; trialkylamine, diazabicyclo undecene (DBU), sodium methoxide, tert-butoxy sodium, tert-butoxy potassium, quaternary ammonium compounds such as tetramethylammonium hydroxide, benzyltrimethylammonium hydroxide, chlorine hydroxide, and tetrabutylammonium hydroxide; and inorganic bases and organic bases such as guanidine, 1,8-diazabicyclo[5.4.0]-7-undecene, and 1,8-diazabicyclo[4,3,0]-7-nonene.

Especially, potassium hydroxide, sodium hydroxide, tetramethylammonium hydroxide, benzyltrimethylammonium hydroxide, chlorine hydroxide, and the quaternary ammonium compounds such as tetrabutylammonium hydroxide are preferable as the above alkalis.

Further, only one kind of alkali may be used, or, alternatively, two or more kinds of alkalis may be used in combination. An amount of use of the alkali is not particularly limited but the alkali may preferably be used in an amount of 0.1 to 10 mass parts, more preferably 0.5 to 5 mass parts, and further preferably 1 to 4 mass parts, per 1 mass part of the water-insoluble colorant.

The ratio of the organic solvent in the dissolving solution and the water-insoluble colorant is not particularly limited, but preferably in the range of 2 to 500 parts by mass, more preferably in the range of 5 to 100 parts by mass, with respect to 1 part by mass of the pigment, for more favorable solubilization state of the water-insoluble colorant.

In the present invention, the solution dissolving the water-insoluble colorant and others and an aqueous medium are mixed with each other. In the present invention, the aqueous medium is water alone or a mixed solvent of water and a water-soluble organic solvent. The organic solvent is preferably added, when water alone is insufficient for keeping the pigment and the dispersant in uniform dispersion state or for acceleration of the aggregate dispersion step with a base. The organic solvent used is not particularly limited. Specific examples of the organic solvent include lower alcohols such as methanol, ethanol, n-propanol, isopropanol, n-butanol, isobutanol, and tert-butanol; aliphatic ketones such as acetone, methyl ethyl ketone, methyl isobutyl ketone, and diacetone alcohol; ethylene glycol, diethylene glycol, triethylene glycol, glycerol, propylene glycol, ethylene glycol monomethyl or monoethyl ether, propylene glycol methyl ether, dipropylene glycol methyl ether, tripropylene glycol methyl ether, ethylene glycol phenyl ether, propylene glycol phenyl ether, diethylene glycol monomethyl or monoethyl ether, diethylene glycol monobutyl ether, triethylene glycol monomethyl or monoethyl ether, N-methylpyrrolidone, 2-pyrrolidone, N,N-dimethylformamide, dimethylimidazolidinone, dimethylsulfoxide, and N,N-dimethylacetamide. These solvents may be used singly or in a combination of two or more thereof. The amount of water in the water-insoluble colorant dispersion is preferably adjusted to 99 to 20 mass%, more preferably to 95 to 30 mass%. The content of the organic solvent in the dispersion is preferably in the range of 50 to 0.1% by mass, and more preferably from 30 to 0.05% by mass, of the aqueous dispersion.

In this case, the embodiment wherein a solution of a water-insoluble colorant homogeneously dissolved therein and an aqueous medium are mixed is not particularly limited. Examples of the embodiment include an embodiment in which a water-insoluble colorant solution is added to an aqueous medium with being stirred, and an embodiment in which a water-insoluble colorant solution and an aqueous medium are each delivered to a certain length of flow path in the same longitudinal direction, and both the solution and the medium are allowed to contact with each other in the course of getting through the flow path, thereby to deposit fine particles of the water-insoluble colorant. With respect to the former (the embodiment of stirring and mixing), it is especially preferred to use an embodiment in which a feed pipe or the like is introduced in an aqueous medium so that a water-insoluble colorant solution is fed from the pipe for addition in liquid. More specifically, the addition in liquid can be performed by using an apparatus described in International Publication WO 2006/121018 pamphlet, paragraph Nos. 0036 to 0047. With respect to the latter (the embodiment of mixing both the liquid and the solvent by using flow path), there can be used micro reactors described in JP-A-2005-307154, paragraph Nos. 0049 to 0052 and FIGS. 1 to 4, and JP-A-2007-39643, paragraph Nos. 0044 to 0050.

In the present invention, a gas, such as the air or oxygen, may coexist at the time of formation of particles. For example, the gas may be used as an oxidant. The embodiment of making the gas coexists is not particularly limited. For example, the gas may be dissolved in a liquid of the water-insoluble colorant and/or an aqueous medium in advance. Alternatively, the gas may be introduced into another medium different from these liquid and medium, and followed by contacting said another medium with these liquid and medium to introduce thereinto.

Water-insoluble colorants such as pigments dissolved in an organic solvent are considered to show rapid crystal growth or give amorphous aggregate when contacted with an aqueous medium. However, in the present invention, because the water-insoluble colorant and the particular polymer compound are copresent as codissolved therein, the fine particles generated during or immediately after mixing of the solution with the aqueous medium are not impaired the dispersion stability. It is possible then to adjust the crystal form and the aggregation state of the fine particles in dispersion by heat treatment.

In the preparation of the dispersion of the present invention, it is preferable to introduce a heating step. Regarding the significance of introducing the heating step, there are the effects described in Japanese Patent No. 3936558 and being representative by so-called Ostwald ripening, and the treatment can decrease the viscosity of the dispersion and also improve the dispersion stability. In addition, the increase in primary particle diameter by heating is suppressed by coprecipitation of two or more kinds of pigments (conversion to solid solution) in the dispersion according to the present invention.

It is preferable that the above heating is carried out at from 30°C to 110°C, and that the heating time is from 60 to 540 minutes. It is also preferable that the heating treatment is carried out after allowing the water-insoluble colorant solution and the aqueous medium to mix each other to obtain the dispersion among which the fine particles are dispersed.

A condition for deposition and formation of the particles of the water-insoluble colorant is not particularly limited, and can be selected from a range from a normal pressure condition to a subcritical or supercritical condition. The temperature at which the particles are prepared under normal pressure is preferably -30 to 100°C, more preferably -10 to 60°C, and particularly preferably 0 to 30°C. A mixing ratio of the water-insoluble colorant solution to the aqueous medium is preferably 1/50 to 2/3, more preferably 1/40 to 1/2, and particularly preferably 1/20 to 3/8 in volume ratio. The concentration of the particles of the water-insoluble colorant in the mixed liquid at the time of deposition of the particles is not particularly limited, but the amount of the particles of the water-insoluble colorant is preferably 10 to 40,000 mg,

more preferably 20 to 30,000 mg, and particularly preferably 50 to 25,000 mg, per 1,000 ml of the solvent.

In the present invention, the solution of the water-insoluble colorant and/or the aqueous medium may contain at least one of additives such as crystal growth inhibitors, ultraviolet absorbents, antioxidants, resin additives, as needed.

Examples of the crystal-growth-preventing agent include phthalocyanine derivatives and quinacridone derivatives well known in this technical field. Specific examples thereof include phthalimidomethyl derivatives of phthalocyanine, sulfonic acid derivatives of phthalocyanine, N-(dialkylamino)methyl derivatives of phthalocyanine, N-(dialkylaminoalkyl) sulfonamide derivatives of phthalocyanine, phthalimidomethyl derivatives of quinacridone, sulfonic acid derivatives of quinacridone, N-(dialkylamino)methyl derivatives of quinacridone and N-(dialkylaminoalkyl)sulfonamide derivatives of quinacridone.

Examples of the ultraviolet absorbent include ultraviolet absorbents such as metal oxides, aminobenzoate-series ultraviolet absorbents, salicylate-series ultraviolet absorbents, benzophenone-series ultraviolet absorbents, benzotriazole-series ultraviolet absorbents, cinnamate-series ultraviolet absorbents, nickel chelate-series ultraviolet absorbents, hindered amine-series ultraviolet absorbents, urocanic acid-series ultraviolet absorbents and vitamin-series ultraviolet absorbents.

Examples of the antioxidant include hindered phenolic compounds, thioalkanic acid ester compounds, organic phosphorus compounds and aromatic amines.

Examples of the resin additives include synthetic resins such as anionically modified polyvinyl alcohol, cationically modified polyvinyl alcohol, polyurethane, carboxymethyl cellulose, polyester, polyallylamine, polyvinyl pyrrolidone, polyethylene imine, polyamine sulfone, polyvinylamine, hydroxyethyl cellulose, hydroxypropyl cellulose, melamine resins and modified products thereof. All of these crystal-growth-preventing agents, ultraviolet absorbents and resin additives may be used either singly or in any combination thereof.

In present invention, it is preferable to treat the liquid mixture containing precipitated colorant particles with acid, as described below in detail. Specifically, it is preferable to treat the dispersion by adding an acid to the liquid mixture when forming aggregates, thereby to form particle aggregates. The acid-using treatment preferably includes steps of aggregating the particles with an acid, separation of the resultant aggregate from a solvent (dispersing medium), concentration, solvent removal and desalting (deacidification). By making a system acidic, it enables to reduce electrostatic repulsion of particles owing to a hydrophilic portion of the acid, and to aggregate the particles.

As the acid that is used in the aggregation of particles, any acid may be used so long as the compound is able to make hardly precipitating fine-particles in the aqueous dispersion aggregate in a form such as slurry, paste, powder-like, granular, cake-like (bulk), sheet-like, short (discontinuous) fiber-like or flake-like form, and able to efficiently separate the resultant aggregate from a solvent according to an ordinary separation method. As the acid, it is preferred to use an acid that forms a water-soluble salt with alkali. It is more preferable that the acid itself has a high solubility to water. In order to conduct desalting as efficiently as possible, it is preferable that the amount of acid used is as small as possible so long as the particles aggregate in the amount of the acid. Examples of the acid include hydrochloric acid, sulfuric acid, nitric acid, acetic acid, phosphoric acid, trifluoroacetic acid, dichloroacetic acid, and methane sulfonic acid. Of these acids, hydrochloric acid, acetic acid, and sulfuric acid are particularly preferable. An aqueous dispersion of colorant particles that has been processed with the acid so as to be easily separable can be easily separated by using a centrifugal separator, a filter, a slurry liquid-solid separator or the like. At this time, a degree of desalting or solvent removal can be controlled by adding diluent water, or by increasing frequency of decantation and washing with water.

In order to remove water and water-soluble solvent in which the thus-obtained aggregate cannot be dissolved , if necessary, it is also possible to use fine powder that is obtained by drying the paste or slurry according to a drying method such as a spray-dry method, centrifugal separation drying method, a filter drying method, or a freeze-drying method. In the present specification, the above-described aggregation which possesses a re-dispersible property may be referred to as Agglomeration, distinguished from strong aggregation not having re-dispersible property. Particularly, these properties can be explained as follows:

> Aggregation (hard aggregation) - For example a primary particles are adhered each other at their crystalline surfaces as the crystalline growth. The grown particle can not consequently be separated, unless otherwise the particle is broken.
>
> Agglomerate - For example particles are adhered at the tip or edge and the grown particle can be separated without broken. Flocculate, such as a soft aggregation of pigment particles spontaneously aggregated in the dispersion liquid is involved in the meaning of the term "Agglomerate". Such agglomerates may be referred to as flock (s). It is noted that the above described states, in overall, may be referred to as merely aggregation when it is not necessary to distinguish them.

In addition, the water-insoluble colorant preferably has a stable crystalline structure in the dispersion according to the present invention, for improvement in durability (heat resistance, light fastness, chemical resistance and others) when used for example as a recording liquid. The heating step described above may be carried out for forming the

crystalline structure, but the crystalline structure may be formed alternatively by bringing the soft aggregates of the particles into contact with the vapor of an organic solvent and/or an organic solvent. Among those, ester series solvents, ketone series solvents, alcoholic solvents, aromatic solvents and aliphatic solvents are preferable; ester series solvents, ketone series solvents, alcoholic solvents are more preferable. Further, it is possible to conduct the both steps of the above heat treating and organic solvent contacting.

Although the reason is not clear, in the present invention, it is possible to increase crystallite diameter without increasing the particle diameter of the water-insoluble colorant particles contained in the dispersion by the contact treatment with an organic solvent. It is thus possible to increase the crystallinity of the water insoluble colorant particles, while the primary particle diameter during precipitation of the particles is preserved. In addition, in the redispersion treatment described below, it is possible to redisperse the aggregate into a medium while the primary particle diameter during precipitation of the particles is preserved and to also preserve a dispersion having high dispersion stability. Also by conducting the treatment, viscosity of the aggregate redispersion remains low, even when the aggregate dispersion is highly concentrated.

It further shows favorable ejecting efficiency, when used as an inkjet recording liquid. These advantageous effects are considered to be based on the decrease of surface energy caused by the water-insoluble colorant formed in the stable crystalline structure. A dispersion more favorable in dispersion stability can be obtained, if the excessive polymer compounds contained in the dispersion are liberated and removed, by bringing the dispersion into contact with the organic solvent above and then, separating the dispersion by centrifugal separation or filter filtration.

Because the particular polymer compound according to the present invention present in the area close to the surface of water-insoluble colorant particles is adsorbed tightly on the water-insoluble colorant particles in the dispersion according to the present invention during formation of the crystalline structure as described above, the particle diameter of the water-insoluble colorant particles is not increased. Therefore, the high dispersion stability is preserved without increase while keeping the primary particle diameter obtained during particle precipitation, even after the redispersion treatment described below.

If a step of forming aggregates is employed, the aggregates in the dispersion according to the present invention are preferably redispersed. As the re-dispersion treatment, there can be exemplified an alkali treatment. Namely, it is preferred to neutralize the particles aggregated (agglomerated) with using the acid, with alkali, and then to re-disperse the particles into water or the like with maintaining a primary particle diameter at the time of deposition of the particles. Because demineralization and solvent removal are complete, it is possible to obtain a conc-base containing small amount of impurities. The alkali used in the redispersion step may be any alkali, if it serves as a neutralizing agent to the dispersant having an acidic hydrophilic part and makes the dispersant more soluble in water. Typical examples of the alkalis include alkali metal hydroxides such as sodium hydroxide, lithium hydroxide, and potassium hydroxide; ammonia and various organic amines such as aminomethylpropanol, dimethylaminopropanol, dimethylethanolamine, diethyltriamine, monoethanolamine, diethanolamine, triethanolamine, butyldiethanolamine and morpholine. These alkalis may be used alone or in combination of two or more.

The amount of the alkali used is not particularly limited within the range in which the aggregated particles can be re-dispersed stably in water. However, when the dispersion is used for end use such as a printing ink or inkjet printer ink, the alkali sometimes causes corrosion of various kinds of parts. Therefore, it is preferred to use the alkali in such an amount that pH is within the range of 6 to 12, and more preferably from 7 to 11.

When the aggregated particles are re-dispersed, re-dispersion can be easily performed by adding a water-soluble organic solvent as a medium for the re-dispersion. The organic solvent usable is not particularly limited. Specific examples of the organic solvent include lower alcohols such as methanol, ethanol, n-propanol, isopropanol, n-butanol, isobutanol, and tert-butanol; aliphatic ketones such as acetone, methylethylketone, methylisobutylketone, and diacetone alcohol; ethylene glycol, diethylene glycol, triethylene glycol, glycerol, propylene glycol, ethylene glycol monomethyl or monoethyl ether, propylene glycol monomethyl ether, dipropylene glycol methyl ether, tripropylene glycol methyl ether, ethylene glycol phenyl ether, propylene glycol phenyl ether, diethylene glycol monomethyl or monoethyl ether, diethylene glycol monobutyl ether, triethylene glycol monomethyl or monoethyl ether, N-methylpyrrolidone, 2-pyrrolidone, N,N-dimethylformamide, dimethylimidazolidinone, dimethylsulfoxide, and N,N-dimethylacetoamide. These solvents may be used singly or in a combination of two or more compounds. When colorant particles are re-dispersed to prepare an aqueous dispersion thereof, the water content is preferably in the range of 99 to 20% by mass and, more preferably from 95 to 30% by mass of the aqueous dispersion respectively. The content of the water-soluble organic solvent is preferably in the range of 50 to 0.1% by mass and, more preferably from 30 to 0.05% by mass of the aqueous dispersion respectively.

When water, the above-described alkali and water-soluble organic solvent are added to the aggregated particles, if necessary, a stirrer, a mixer, a dispersing machine may be used. When a paste or slurry of a water-insoluble colorant which is high in water content is used, addition of water is unnecessary. Further, heating, cooling, distillation or the like may be conducted for the purpose of enhancing efficiency of re-dispersion and another purpose of removing unnecessary water-soluble organic solvent, or an excessive alkali or the like.

The water-insoluble colorant in the dispersion according to the present invention preferably has a crystalline structure. When it has a stable crystalline structure, the dispersion according to the present invention can be improved in durability (heat resistance, light fastness, chemical resistance and others), when used, for example, as a recording liquid.

The phrase "the colorant particle has a crystalline structure" used in the present invention means, although the calculation method and measurement of the crystal diameter is not particularly limited, that when the water-insoluble colorant particles contained in an dispersion are subjected to a powder X-ray diffraction analysis, the results of analysis do not meet any one of the following (i) and (ii):

(i) A halo that is specific to amorphous (non-crystalline) substance is observed.
(ii) The crystallite diameter that is determined by the measuring method described below is less than 2 nm (20 Å), or the substance is supposed to be amorphous.

In the present invention, the crystallite diameter is measured and calculated as follows:

First, X-ray diffraction analysis is performed by using Cu-K$\alpha$1 ray.
Thereafter, in the 28 range of 4 degrees to 70 degrees, a half width of a peak that shows the maximum intensity or a peak that has a sufficiently large intensity and can be discriminated from a peak(s) adjacent thereto, is measured. Then, the crystallite diameter is calculated according to the following Scherrer's equation:

$$D = K \times \lambda / (\beta \times \cos\theta)$$

wherein D represents a crystallite diameter (Å, a size of crystallite), $\lambda$ represents a measuring X-ray wavelength (Å), $\beta$ represents an extent (radian) of a diffraction line dependent on a diameter of the crystal, $\theta$ represents a Bragg angle (radian) of the diffraction line, and K represents a constant which is variable depending on the constant of $\beta$ and D.

Generally, it is known that when a half width $\beta/2$ is used in place of $\beta$, K equals 0.9. Further, since the wavelength of Cu-K$\alpha$1 ray is 0.154050 nm (1.54050 Å), the crystallite diameter D (nm) in the present invention is calculated according to the following equation:

$$D = 0.9 \times 1.54050 / (\beta/2 \times \cos\theta)$$

In this case, when a peak of the spectrum obtained by the measurement is so broad that a half width of the peak is difficult to make out, it is assumed that the crystallite diameter is less than 2 nm (20 Å) (fine crystalline state) or the substance is in an amorphous state (non-crystalline).

The water-insoluble colorant in the dispersion according to the present invention preferably has a crystalline structure, and the crystallite diameter is preferably 20Å or more and 500Å or less, more preferably 20Å or more and less than 400Å, and particularly preferably 20Å or more and less than 350Å, for well-balanced improvement in light fastness and transparency. In addition, the water-insoluble colorant particularly preferably has an average primary particle diameter not larger than that of the water-insoluble colorant, as determined by TEM observation described below, and a crystallite diameter almost the same as the average primary particle diameter above for preservation of the transparency of the dispersion and for obtaining favorable light fastness.

[Average diameter of primary particles from observation by electron microscope]

In the present invention, the average diameter of the water-insoluble colorant contained in the dispersion can be determined by observing the shapes of the primary particles formed when the water-insoluble colorant solution and the aqueous medium are mixed under transmission electron microscope (TEM) and calculating according to the following way. In the case of using the TEM, the dispersion (dispersion liquid) containing fine particles of water-insoluble colorant is diluted. The diluted dispersion is dropped onto a Cu 200 mesh to which a carbon film is attached, and then the fine particles are dried on the mesh. The diameter of each of 300 particles is measured from images of the particles photographed to 100000 times using TEM (1200EX, manufactured by JEOL Ltd.), and then an average particle diameter is calculated. At this time, because the dispersion is dried on the Cu 200 mesh as described above, even the water-insoluble colorant is in a state well dispersed in the dispersion, there is a case where particles of the water-insoluble colorant

apparently aggregate during the dry step, which makes it difficult to discriminate an accurate particle size. In this case, an average particle diameter is calculated by using isolated 300 particles that are not piled on other particles. When the particles of the water-insoluble colorant are not spherical, the width of the particle major axis (the longest size of the particle) is measured.

In one embodiment of the present invention, an average particle size (primary particle) of the water-insoluble colorant is preferably 5 to 100 nm or less. Especially, the average particle size(primary particle) of the water-insoluble colorant that is calculated from observation by using the transmission electron microscope (TEM) is preferably from 5 nm to 50 nm, and more preferably from 5 nm to 40 nm. This is from a viewpoint of transparency of the dispersion and compatibility of dispersion stability and resistance to light in the dispersion. When the average particle size is too small, it is sometimes difficult to keep a stable dispersion state in the dispersion for a long time, or it is sometimes difficult to obtain excellent resistance to light. On the other hand, when the average particle size is too large, it is sometimes difficult to obtain good transparency of the dispersion. In the present invention, the water-insoluble colorant that contains two or more kinds of pigments may consist of pigments, or may contain additional compounds other than the pigments. In such a case, it is preferably a compound having a pigment-like skeleton. At this time, it is preferable that the particles of the water-insoluble colorant are composed of a solid solution of two or more kinds of pigments. However, a mixture of a portion having a crystalline structure and another portion having a non-crystalline structure may be present in the particle. Further, a described above, the particle may be composed of a core to which the above dispersing agent (a polymer compound, a surfactant or the like) is adhered so as to cover the core therewith, a component of the core being water-insoluble colorants or a mixture of the pigments or the like and another compound.

[Average particle diameter according to a dynamic light-scattering method]

In the present invention, a dispersion state of the water-insoluble colorant may be also evaluated according to a dynamic light-scattering method. Thereby, a volume average particle diameter of the water-insoluble colorant can be calculated. The principle of evaluation is detailed below. Particles with the size ranging from about 1 nm to about 5 μm are momentarily changing their position and direction in Brownian motion such as translation and rotation. Accordingly, by irradiating a laser light to these particles and then detecting the resultant scattered light, fluctuation of the scattered light intensity depending on Brownian motion is observed. By observing the fluctuation of the scattered light intensity with respect to time, a speed (diffusion coefficient) of the particles in Brownian motion is calculated and the size of the particles can be known.

Applying the above principle, an average particle diameter (hereinafter, volume average particle diameter will be referred to as "average particle diameter") of the water-insoluble colorant is measured. When the measured value is similar to the average primary particle diameter that is obtained from the TEM observation, it means that the particles in a liquid are in mono dispersion (the situation in which particles are neither bonding nor aggregating to each other). Fluctuation in the value means some of the primary particles of the water-insoluble colorant are present in the secondary particle state (aggregation state).
Thus, the combination of TEM observation of the primary particle diameter and measurement of secondary particles by dynamic light-scattering method allows estimation of the dispersion state of the water-insoluble colorant.

It was found in the present invention, that the average particle diameter of the water-insoluble colorant in dispersion medium, as determined by dynamic light-scattering method, was similar to or not so separated from the average primary particle diameter obtained by TEM observation. In other words, it has been confirmed that a mono dispersion of the water-insoluble colorant in a dispersion medium according to the present invention can be attained. On the other hand, the average particle diameter of the water-insoluble colorants in the dispersion medium, as determined by dynamic light-scattering method, is preferably 5 to 100 nm from the viewpoint of color-developing efficiency when the dispersion is used for example as a recording liquid, more preferably 5 to 50 nm for improvement in transparency, and particularly preferably 5 to 45 nm for improvement in discharging stability and expansion of the color-reproducing region when the dispersion is used as an inkjet recording liquid. The water-insoluble colorant in the dispersion medium according to the present invention has an average diameter close to that of the primary particles of the water-insoluble colorant even in the fine-sized region of 50 nm or less, preserves its high transparency even when dispersed, and thus can be kept in favorable dispersion state.

Unless otherwise specified, the dispersion average particle diameter in the invention means an average particle diameter measured by a dynamic light-scattering method as described below, and is a value measured with FPAR-1000 (trade name; manufactured by Otsuka Electronics Co., Ltd.).

The water-insoluble colorant that is used in the present invention may be contained in resin fine particles or inorganic fine particles. At this time, it is preferable that the resin fine particles and inorganic fine particles are a non-colored component in order not to degrade a tint of the water-insoluble colorant. An average particle size of the resin fine particles or the inorganic fine particles is preferably from 6 nm to 200 nm. When the dispersion of the water-insoluble colorant is used as an inkjet recording liquid, the average particle size is more preferably from 6 nm to 150 nm, and

especially preferably from 6 nm to 100 nm, from a viewpoint of obtaining excellent discharge (emission) stability.

It should be noted that even though the water-insoluble colorant in a dispersion medium is completely in a monodispersion, error of measurement or the like sometimes causes a difference between the average particle diameter according to the dynamic light-scattering method and the average particle diameter from TEM observation. For example, it is necessary that a concentration of a liquid to be measured is suitable for both the performance of the measurement apparatus and the method of detecting scattered light. Accordingly, error occurs unless a liquid to be measured has a concentration enough to secure a sufficient amount of transmission of light. Further, when nano-sized particles are measured, the thus-obtained signal intensities are so feeble that they are strongly affected by dust, which causes errors. Therefore, it is necessary to take care of pre-treatment of the sample and purity of environment for measurement. When nano-sized particles are measured, a laser light source having a transmission output of 100 mW or more is suitable for enhancing intensities of scattered light.

Further, it is preferable that a particle diameter distribution of the water-insoluble colorant dispersed in a dispersion medium in the present invention is monodispersion. Monodisperse particles are advantageous because adverse influence owing to light-scatting at large-sized particles can be reduced. For example, when aggregate is formed by using the dispersion at printing, recording, or the like, the mono dispersion has advantages to control of a filling form of the formed aggregate or the like. As an indicator that can be utilized to evaluate dispersity of the dispersion(hereinafter, this may be merely referred to as "dispersity "), for example, use can be made of a difference between the diameter (D90) of particles that occupy 90% by number and the diameter (D10) of particles that occupy 10% by number of the total particle numbers, in the following integral equation of the particle diameter distribution function, with respect to the average particle diameter that is obtained according to the dynamic light-scattering method:

$$dG = f(D) \times d(D)$$

wherein G represents the number of particles, and D represents a primary particle diameter.

In the present invention, the above difference between the size (D90) and the size (D10) is preferably 45 nm or less, and more preferably from 1 nm to 30 nm, and especially preferably from 1 nm to 20 nm.

In the present invention, the values measured by the dynamic light-scattering method described above are used as an indicator of the monodispersibility described above, unless otherwise specified.

The method of preparing the recording liquid (hereinafter, also referred to as "ink composition") according to the present invention is not particularly limited, and, it may be prepared, for example, by mixing components such as a particular polymer compound, surfactant, and aqueous solvent, so as to be uniformly dissolved or dispersed, during aggregating the dispersion according to the present invention into the soft aggregation and subsequent redispersion, as described above. It is preferable that the recording liquid of the present invention contains the above water-insoluble colorant in an amount of 0.1 % by mass to 15% by mass of the recording liquid. When an excessive amount of polymer compounds or other additives are contained in the prepared ink, these materials may be properly removed according to a method such as centrifugal separation and dialysis, thereby to re-prepare the ink composition. The recording liquid of the present invention may be used alone. Alternatively, the recording liquid may be combined with another ink to prepare an ink set of the present invention.

A water-soluble solvent is preferably used as a component for the ink composition, specifically as an anti-drying agent, a wetting agent, or a penetration-accelerating agent. In particular, in the case of an aqueous ink composition for use in the ink-jet recording system, a water-soluble organic solvent is preferably used as an anti-drying agent, a wetting agent, or a penetration-accelerating agent. An anti-drying agent or a wetting agent is used for prevention of clogging of nozzle due to inkjet ink dried in the ink-ejecting opening of the nozzle. A water-soluble organic solvent having a vapor pressure lower than water is preferable as the anti-drying agent or the wetting agent. Further, a water-soluble organic solvent is preferably used as a penetration-accelerating agent for better penetration of the ink composition (in particular, inkjet ink composition) into paper.

In the present invention, the above-mentioned water-soluble solvent (a) preferably contains a hydrophobic solvent (preferably hydrophobic organic solvent) having a SP value of 27.5 or less in an amount of 90% by mass or more and a compound represented by the following formula (III), for the purpose of prevention of curling. The component of the "water-soluble solvent having a SP value of 27.5 or less" and the "compound represented by formula (III)" may be identical with each other.

The solubility parameter (SP value) of the water-soluble solvent according to the present invention is a value defined as the square root of the molecule aggregation energy, and can be determined by the method described in R. F. Fedors, Polymer Engineering Science, 14, p.147 (1967), and the value is used in the present invention.

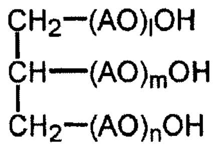

Formula (III)

In formula (III), l, m, and n each independently represent an integer of 1 or more, and l + m + n = 3 to 15. A too-small 1 + m + n value leads to low curling resistance, while a too-large value leads to deterioration in ejection efficiency. In particular, the value 1 + m + n is preferably 3 to 12, more preferably 3 to 10. In formula (III), AO represents an ethyleneoxy group or a propyleneoxy group, and a propyleneoxy group is particularly preferable. The AOs in the $(AO)_l$, $(AO)_m$, and $(AO)_n$ may be the same as or different from each other.

Hereinafter, examples of the water-soluble solvents having an SP value of 27.5 or less and the compounds represented by formula (III) will be listed respectively with SP values (in parenthesis). However, the present invention is not limited to these examples.

· Diethylene glycol monoethyl ether (22.4)
· Diethylene glycol monobuthyl ether (21.5)
· Triethylene glycol monobuthyl ether (21.1)
· Dipropylene glycol monomethyl ether (21.3)
· Dipropylene glycol (27.2)

(III-1) 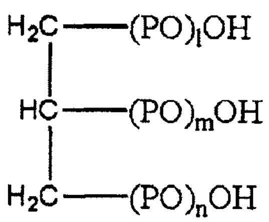 l+m+n=3 (26.4) PO=propyleneoxy

(III-2) 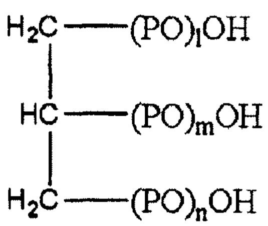 l+m+n=4 (24.9) PO=propyleneoxy

(III-3) 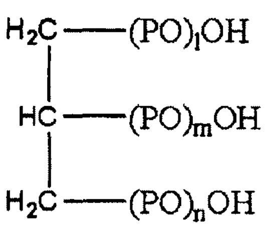 l+m+n=5 (23.9) PO=propyleneoxy

(III-4) 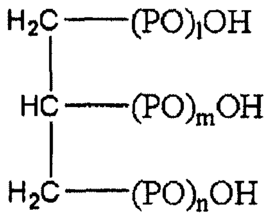 l+m+n=6 (23.2) PO=propyleneoxy

(III-5) 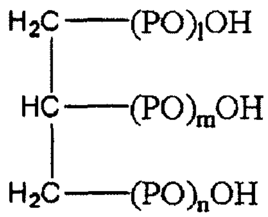 l+m+n=7 (22.6) PO=propyleneoxy

- · $nC_4H_9O(AO)_4$-H (AO is EO or PO, the ratio of EO:PO=1:1) (20.1)
- · $nC_4H_9O(AO)_{10}$-H (AO is EO or PO, the ratio of EO:PO=1:1) (18.8) $HO(A'O)_{40}$-H (A'O is EO or PO, the ratio of EO:PO=1:3) (18.7)
- · $HO(A''O)_{55}$-H (A"O is EO or PO, the ratio of EO:PO=5:6) (18.8)
- · $HO(PO)_3$-H (24.7)
- · $HO(PO)_7$-H (21.2)
- · 1,2-hexanediol (27.4)

In the present invention, EO and PO represent an ethyleneoxy group and a propyleneoxy group, respectively.

The rate (content) of the compound represented by formula (III) in the water-soluble solvent (a) is preferably 10% or more, more preferably, 30% or more, and still more preferably 50% or more. There is no particular problem generated, if the value is higher. The above range is preferable, since a value in the range above enables further improvement of both in ink stability and ejection efficiency and favorable prevention of curling.

Also in the present invention, another solvent may be used in combination, to an extent that the ratio of the solvent having a SP value of 27.5 or less is not less than 90%.

Examples of the water-soluble organic solvent usable in combination include polyvalent alcohols including glycerol, 1,2,6-hexanetriol, trimethylolpropane and alkanediols such as ethylene glycol, propylene glycol, diethylene glycol, triethylene glycol, tetraethylene glycol, pentaethylene glycol, dipropylene glycol, 2-butene-1,4-diol, 2-ethyl-1,3-hexanediol, 2-methyl-2,4-pentanediol, 1,2-octanediol, 1,2-hexanediol, 1,2-pentanediol, and 4-methyl-1,2-pentanediol; sugars such as glucose, mannose, fructose, ribose, xylose, arabinose, galactose, aldonic acid, glucitol, (sorbit), maltose, cellobiose, lactose, sucrose, trehalose and maltotriose; sugar alcohols; hyaluronic acids; so-called solid wetting agents such as urea compounds; alkyl alcohols having 1 to 4 carbon atoms such as ethanol, methanol, butanol, propanol, and isopropanol;

glycol ethers such as ethylene glycol monomethyl ether, ethylene glycol monoethyl ether, ethylene glycol monobutyl ether, ethylene glycol monomethyl ether acetate, diethylene glycol monomethyl ether, diethylene glycol monoethyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-t-butyl ether, 1-methyl-1-methoxybutanol, propylene glycol monomethyl ether, propylene glycol monoethyl ether, propylene glycol mono-t-butyl ether, propylene glycol mono-n-propyl ether, propylene glycol mono-iso-propyl ether, dipropylene glycol monomethyl ether, dipropylene glycol monoethyl ether, dipropylene glycol mono-n-propyl ether, and dipropylene glycol mono-iso-propyl ether; 2-pyrrolidone, N-methyl-2-pyrrolidone, 1,3-dimethyl-2-imidazolidinone, formamide, acetamide, dimethylsulfoxide, sorbit, sorbitan, acetin, diacetin, triacetin, sulfolane, and the like, and these solvents may be used alone or in combination of two or more.

A polyvalent alcohol is useful as the anti-drying or wetting agent, and examples thereof include glycerol, ethylene glycol, diethylene glycol, triethylene glycol, propylene glycol, dipropylene glycol, tripropylene glycol, 1,3-butanediol, 2,3-butanediol, 1,4-butanediol, 3-methyl-1,3-butanediol, 1,5-pentanediol, tetraethylene glycol, 1,6-hexanediol, 2-methyl-2,4-pentanediol, polyethylene glycol, 1,2,4-butanetriol, 1,2,6-hexanetriol, and the like. These alcohols may be used alone

or in combination of two or more.

A polyol compound is favorable as the penetrant, and examples of the aliphatic diols include 2-ethyl-2-methyl-1,3-propanediol, 3,3-dimethyl-1,2-butanediol, 2,2-diethyl-1,3-propanediol, 2-methyl-2-propyl-1,3-propanediol, 2,4-dimethyl-2,4-pentanediol, 2,5-dimethyl-2,5-hexanediol, 5-hexene-1,2-diol, 2-ethyl-1,3-hexanediol and the like. In particular, 2-ethyl-1,3-hexanediol and 2,2,4-trimethyl-1,3-pentanediol can be mentioned as favorable examples.

The water-soluble solvent (a) for use in the recording liquid according to the present invention may be used alone or in combination of two or more. The content of the water-soluble solvent in the entire ink composition is preferably 1 mass% or more and 60 mass% or less, more preferably 5 mass% or more and 40 mass% or less, and particularly preferably 10 mass% or more and 30 mass% or less, for assurance of stability and ejection reliability.

The amount of water (c) added to the recording liquid according to the present invention is not particularly limited, but, preferably 10 mass% or more a nd 99 mass% or less, more preferably 30 mass% or more and 80 mass% or less , and still more preferably 50 mass% or more and 70 mass% or less, in the ent ire ink composition, for assurance of stability and ejection reliability.

The recording liquid of the present invention may be used in various image-forming methods and apparatuses, such as a variety of printing methods, inkjet process, and electrophotography. Imaging can be performed according to an image-forming method using the apparatuses. Further, according to the inkjet process, fine patterns may be formed, or dosage of drugs may be conducted.

It is preferable that the recording liquid of the present invention is used as an inkjet recording liquid. It is also preferred to prepare an ink set using the inkjet recording liquid. It is also preferred to prepare a printed article having an image recorded by use of the recording liquid or the ink set of the present invention, with a provider that has a function to provide the recording liquid to a recording medium. It is more preferred to prepare a printed article having an image with a shading nuance adjusted by a provider that has a function to adjust an applying amount or concentration of the recording liquid. It is also preferable that the recording liquid or ink set is used in an image-forming method that includes a process of recording an image by providing the recording liquid to a recording medium (material). Further, according to the present invention, it is also possible to produce an image-forming apparatus having the means for recording an image by using the above recording liquid or ink set and providing the recording liquid to a recording medium.

The dispersion of the present invention having excellent performance can realize an image recording of high quality and high vividness when the dispersion is used as ink. In addition, it can be suitably used as a material for forming color filters.

The present invention will be described in more detail based on the following examples, but the invention is not intended to be limited thereto.

The dispersion according to the present invention have a favorable operational advantage that it is resistant to aggregation and retains its stabilized dispersion state of the fine particles for an extended period of time, even though it contains extremely fine particles of a water-insoluble colorant. In addition, the dispersion according to the present invention can attain its high dispersion stability even when converted to a redispersion liquid at high concentration, and the ink composition prepared by using the dispersion can provide a recording liquid higher in storage stability, allowing storage for an extended period of time. Further, it is possible to obtain the favorable dispersion efficiently at high purity by the method according to the present invention. Further, the recording liquid, the image-forming process and the image-forming device according to the present invention permit favorable image formation at high precision.

The present invention will be described in more detail based on the following examples, but the invention is not intended to be limited thereto.

## EXAMPLES

In the following examples, the terms "part(s)" and "%" are values by mass, unless otherwise specified. Average particle size of each of the dispersions according to the dynamic scattering method was measured by using FPAR-1000 (trade name; manufactured by Otsuka Electronics Co., Ltd.) after dilution with ion-exchanged water. Further, evaluation of the average particle diameter (primary particle) from observation with the transmission electron microscope (TEM) was conducted by adding dropwise a diluted dispersion onto a Cu 200 mesh to which a carbon film was attached, and then drying, and thereafter measuring the major axis of each of 300 particles that were isolated and not piled up each other, from images of the particles photographed to 100,000 times using TEM (1200EX, manufactured by JEOL Ltd.), and then calculating an average value as an average particle diameter. Hereinafter, the average particle diameter calculated from TEM observation is described as a TEM average particle diameter. The "co-solubilization base" described below means a base used for solubilization of the pigment together with the polymer compounds.

(Example 1)

6.6 parts by mass of C. I. Pigment Red 122, 6.6 parts by mass of Pigment Violet 19, 6.6 parts by mass of a

particular polymer compound (the particular polymer compound (D-1), acid value: 200 mg-KOH/g, Mw=18,000), 140 parts by mass (g) of dimethylsulfoxide, and 40.7 parts by mass (g) of tetramethylammonium hydroxide [TMAH] (cosolubilization base, 25% methanol solution, manufactured by Alfa Aesar) were mixed; and the mixture was heated to 60°C and agitated for 2 hours to dissolve the pigment and the particular polymer compound was completely, thereby giving a dark blue purple pigment solution. In all of the following Examples and Comparative Examples, TMAH was used as the base for solubilization of pigments and polymer compounds.

The pigment solution was subjected to ultrasonic treatment and fed by a feed pump into 2,000 ml of ion-exchanged water stirred by a stirrer (at a water temperature 12°C in ice bath) rapidly at a rate of 100 ml/minute, to give a red-tinted pigment dispersion (precipitation liquid) 101a. The average particle diameter of the pigment fine particle in the pigment dispersion, as determined by dynamic light-scattering method, was 27.2 nm (TEM average particle diameter: 21.8 nm). A high-concentration dispersion containing fine particles was obtained, as the progress of aggregation was prevented. There was no change in particle diameter and no precipitate observed after storage for 2 weeks. It was in a kinetically-formed loose aggregation state, and it was possible to pulverize into the particles having an average particle diameter of 23.6 nm by processing in an ultrasonic homogenizer or by storage over a period of one month.

Subsequently, the pigment dispersion 101a was placed in a 3-L flask and stirred under heat at 50°C for 6 hours. The mixture was then cooled to room temperature, and 11 ml of hydrochloric acid was added thereto dropwise, to adjust the pH to about 3 so that pigment particles were aggregated from the pigment dispersion. Then, 200 ml of ethyl acetate was added thereto additionally; the mixture was stirred for 2 hours; and filtered through a membrane filter having an average pore size of 0.2 μm under reduced pressure so as to give a colorant cake containing the water-insoluble colorants and the specific polymeric compound. Then, the colorant cake was washed with acetone and then washed twice with ion-exchange water, to give aggregates 101b of PR-122 and PV-19 (quinacridone organic pigments) and the particular polymer compound (D-1) from which salts and solvents were removed.

Subsequently, 1N aqueous sodium hydroxide solution was added to 1 part by mass of the aggregates; ion-exchange water [aqueous redispersion medium] was added thereto to obtain a pigment concentration of 10%; and the mixture was redispersed by ultrasonication, to give a pigment dispersion (redispersion) 101 adjusted to have a pH of 9.0. The average particle diameter of the pigment fine particles in the pigment dispersion 101, as determined by dynamic light-scattering method, was 29.0 nm (TEM-average particle diameter: 22.0 nm), showing that a dispersion containing fine pigment particles could be obtained even at higher concentration.

(Example 2)

Aggregates 102b of PR-122 and PV-19 (quinacridone organic pigments) and a particular polymer compound (D-1) were prepared in a manner similar to Example 1, except that stirring at 50°C for 6 hours and washing with acetone carried out for the pigment dispersion 101 a were eliminated.

Subsequently, 1N aqueous sodium hydroxide solution was added to 1 part by mass of the aggregates; ion-exchange water [aqueous redispersion medium] was added thereto to obtain a pigment concentration of 10%; and the mixture was redispersed by ultrasonication, to give a pigment dispersion (redispersion) 102 adjusted to have a pH of 9.0. The average particle diameter of the pigment fine particles in the pigment dispersion 102, as determined by dynamic light-scattering method, was 27.1 nm (TEM-average particle diameter: 21.8 nm), showing that a dispersion containing fine pigment particles could be obtained even at higher concentration.

(Examples 3-6, Comparative Example 1)

Aggregates 103b to 106b and c01b of pigments and a polymer compound (c01b corresponds to Comparative Example 1) and also pigment dispersions 103 to 106, c01 were prepared in a manner similar to Example 1, except that the pigments and/or the additive used in Example 1 were changed to those shown in the following Table 1 and the amount of the co-solubilization base was changed to allow the pigments and the polymer compound to be completely dissolved. In Examples 5 and 6, tetramethylammonium hydroxide used in Example 1 was replaced with 40% benzyltrimethylammonium hydroxide solution in methanol, for solubilization of the pigments and the polymer compound.

(Comparative Example 2)

13.2 parts by mass of C. I. Pigment Red 122, 6.6 parts by mass of a particular polymer compound (the particular polymer compound (D-1), acid value: 200 mg-KOH/g, Mw=18,000), 140 parts by mass (g) of dimethylsulfoxide, and 40.6 parts by mass (g) of tetramethylammonium hydroxide (25% methanol solution, Alfa Aesar) were mixed; and the mixture was heated to 60°C and agitated for 2 hours to dissolve the pigment and the particular polymer compound was completely, thereby giving a dark blue purple pigment solution.

The pigment solution was subjected to ultrasonic treatment and fed by a feed pump into 2,000 ml of ion-exchanged water stirred by a stirrer (at a water temperature 12°C in ice bath) rapidly at a rate of 100 ml/minute, to give a red-tinted pigment dispersion (precipitation liquid) c02a. The average particle diameter of the pigment fine particles in the pigment dispersion c02a, as determined by dynamic light-scattering method, was 60.3 nm (TEM-average particle diameter: 23.8 nm), showing that fine primary particles were formed, but the secondary particles therein were relatively large and formed the dispersion in a relatively advanced aggregation state.

Subsequently, the pigment dispersion c02a was placed in a 3-L flask and stirred under heat at 50°C for 6 hours. The mixture was then cooled to room temperature, and 11 ml of hydrochloric acid was added thereto dropwise, to adjust the pH to about 3 so that pigment particles were aggregated from the pigment dispersion. Then, 200 ml of ethyl acetate was added thereto additionally; the mixture was stirred for 2 hours; and filtered through a membrane filter having an average pore size of 0.2 μm under reduced pressure so as to give a colorant cake containing the water-insoluble colorants and the specific polymeric compound. Then, the colorant cake was washed with acetone and then washed twice with ion-exchange water, to give aggregates c02b of PR-122 (quinacridone organic pigments) and the particular polymer compound (D-1) from which salts and solvents were removed.

Subsequently, 1N aqueous sodium hydroxide solution was added to 1 part by mass of the powder; ion-exchange water [aqueous redispersion medium] was added thereto to obtain a pigment concentration of 10%; and the mixture was redispersed by ultrasonication, to give a pigment dispersion (redispersion) c02 adjusted to have a pH of 9.0. The average particle diameter of the pigment fine particles in the pigment dispersion c02, as determined by dynamic light-scattering method, was 27.3 nm (TEM-average particle diameter: 23.9 nm),.

(Comparative Example 3-5)

Aggregates c03b to c05b and pigment dispersions c03 to c05 of were prepared in a manner similar to Comparative Example 2, except that the pigments and the amount of the polymer compound to be completely dissolved, as indicated in Table 1..

After washed with triethylene glycol monobutylether, the soft aggregates were dissolved in N-methylpyrrolidone, and then the purity of the pigment was determined from UV absorption spectrum. The residual rate of the dispersant was determined from the difference between the ratio of the dispersant to the pigment before reaction and the ratio of the dispersant to the pigment after solvent washing. The dispersant was used in an amount of 50 mass %, with respect to the total amount of the pigments. The results are shown in Table 1. "D/P" means "dispersing agent/pigment".

[Table 1]

| # | Pigment | Polymer Compound | D/P(I) *2 | D/P(F) *3 | DRR*4 (%) | Remarks *5 |
|---|---|---|---|---|---|---|
| 101 | CIPR122/CIPV19 | D-1 | 0.5 | 0.21 | 42 | WE |
| 102 | CIPR122/CIPV19 | D-1 | 0.5 | 0.20 | 40 | WE |
| 103 | CIPR122/CIPV19 | D-30 | 0.5 | 0.34 | 68 | WE |
| 104 | CIPR202/CIPV19 | D-23 | 0.5 | 0.24 | 48 | WE |
| 105 | CIPY128/CIPY74 | D-30 | 0.5 | 0.30 | 60 | WE |
| 106 | CIPY128/CIOR13 | D-1 | 0.5 | 0.22 | 44 | WE |
| c01 | CIPR122/CIPV19 | St/MA*1 | 0.5 | 0.01 | 2 | CE |
| c02 | CIPR122 | D-1 | 0.5 | 0.06 | 12 | CE |
| c03 | CIPV19 | D-1 | 0.5 | 0.07 | 14 | CE |
| c04 | CIPR122 | D-30 | 0.5 | 0.1 | 20 | CE |
| c05 | CIPV19 | D-30 | 0.5 | 0.1 | 20 | CE |

Note: [The same will be applied in the following tables]
* 1 : styrene/methacrylic acid copolymer
*2 : D/P(I) - dispersion/pigment ratio at dissolving
*3 : D/P(F) - dispersion/pigment ratio after washing by a solvent
*4 : DRR - dispersion residual rate (%)
*5 : WE= working example, CE= comparative example

The results in Table 1 show that the aggregates (agglomerates) prepared by using a conventional styrene/methacrylate copolymer and a single kind of pigment have low residual dispersant rate after washing with an organic solvent, indicating that the dispersant is readily removed in the hydrophobic solvent. In contrast, the residual rate was higher in the present invention, demonstrating that the solvent resistance was improved.

[Evaluation of storage stability]

The dynamic light scattering-average particle diameter of each of the alkaline inks 101 to 106, c01 to c05, which were prepared at a pigment concentration of 4 mass % and a glycerol concentration of 30 mass % by using the dispersions prepared as described above, was measured first on the day of preparation. Then, the ink was left forcibly under heat at 60°C for 14 days, and the average particle diameter (dia.) was measured once again by dynamic light scattering.
The viscosity (visc.) was measured by using DV-II+ VISCOMETER (trade name) manufactured by BROOKFIELD. The results are shown in Table 2.
[Table 2]

| # | Pigment | compound | Within 1 day *6 | | 14 days after at 60°C | | Remarks |
|---|---|---|---|---|---|---|---|
| | | | Polymer Dia. (Mv) (nm) | Visc. (mPa·s) | Dia. (MV) (nm) | Vic. (mPa·s) | |
| 101 | CIPR122/CIPV19 | D-1 | 29 | 4.4 | 30 | 4.4 | WE |
| 102 | CIPR122/CIPV19 | D-1 | 27 | 4.3 | 32 | 4.4 | WE |
| 103 | CIPR122/CIPV19 | D-30 | 25 | 4.3 | 25 | 4.3 | WE |
| 104 | CIPR202/CIPV19 | D-23 | 32 | 4.4 | 33 | 4.5 | WE |
| 105 | CIPY128/CIPY74 | D-30 | 35 | 4.3 | 37 | 4.4 | WE |
| 106 | CIPY128/CIOR13 | D-1 | 33 | 4.4 | 34 | 4.4 | WE |
| c01 | CIPR122/CIPV19 | St/MA | 25 | 5.5 | 50 | 6.2 | CE |
| c02 | CIPR122 | D-1 | 27 | 4.5 | 52 | 4.9 | CE |
| c03 | CIPV19 | D-1 | 33 | 4.4 | 51 | 4.6 | CE |
| c04 | CIPR122 | D-30 | 29 | 4.3 | 49 | 4.7 | CE |
| c05 | CIPV19 | D-30 | 31 | 4.5 | 53 | 5.0 | CE |
| Note: [The same will be applied in the following tables]<br>*6 Value measured immediately after preparation within 1 day at longest. | | | | | | | |

The results in Table 2 showed that, in contrast to the ink using the conventional styrene/methacrylic acid copolymer and the ink containing a single kind of pigment, which shows increase in the particle diameter of the particles therein, the inks containing the dispersant according to the present invention are improved in stability.
As well as above, the dynamic light scattering-average particle diameter of each of the alkaline inks 101 to 106, c01 to c05, which were prepared at a pigment concentration of 4 mass % and a triethylene glycol monobutylether concentration of 20 mass % by using the dispersions, was measured first on the day of preparation. Then, the ink was left forcibly under heat at 60°C for 14 days, and the average particle diameter was measured once again by dynamic light scattering.
The viscosity (visc.) was measured by using DV-II+ VISCOMETER (trade name) manufactured by BROOKFIELD. The results are shown in Table 2.
[Table3]

| # | Pigment | Dispersant | Within 1 day | | 14 days after at 60°C | | Remarks |
|---|---|---|---|---|---|---|---|
| | | | Dia. (Mv) (nm) | Visc. (mPa·s) | Dia. (Mv) (nm) | Visc. (mPa·s) | |
| 101 | CIPRI22/CIPV19 | D-1 | 30 | 6.1 | 35 | 6.5 | WE |
| 102 | CIPR122/CIPV19 | D-1 | 31 | 6.2 | 40 | 6.7 | WE |
| 103 | CIPR122/CIPV19 | D-30 | 27 | 6.1 | 28 | 6.3 | WE |
| 104 | CIPR202/CIPV19 | D-23 | 35 | 6.1 | 38 | 6.3 | WE |
| 105 | CIPY128/CIPY74 | D-30 | 37 | 6.3 | 39 | 6.5 | WE |
| 106 | CIPY128/CIOR13 | D-1 | 36 | 6.3 | 41 | 6.6 | WE |
| c01 | CIPRI22/CIPV19 | St/MA | 41 | 20.3 | 258 | N/A | CE |
| c02 | CIPR122 | D-1 | 48 | N/A | N/A | N/A | CE |
| c03 | CIPV19 | D-1 | 47 | N/A | N/A | N/A | CE |
| c04 | CIPR 122 | D-30 | 51 | 25.7 | N/A | N/A | CE |
| c05 | CIPV 19 | D-30 | 48 | 21.5 | N/A | N/A | CE |
| Note: [The same will be applied in the following tables]<br>N/A : value is not available in measurement due to aggregation | | | | | | | |

The results in Table 3 showed that, in contrast to the hydrophobic solvent inks using the conventional styrene/methacrylic acid copolymer and containing a single kind of pigment, which cause aggregation rapidly to increase particle diameter and viscosity to a level prohibiting measurement, the inks containing the dispersant according to the present invention are improved significantly in stability.

(Evaluation of Ink)

For each of the inks shown in Table 2, the optical density (OD) on a plain paper that is not a non-gloss medium of plain paper was evaluated by using an inkjet printer EM930C Printer (trade name, manufactured by Seiko Epson Corporation). In measurement of the optical density (OD) on plain paper, Xerox 4024 paper (trade name, manufactured by Xerox, US) was used as the plain paper, and a paper printed at a printing mode of Photo 720 dpi was used as the sample.

(Measurement of Optical Density)

The optical density (O.D.) of the sample that is a printed plain paper was measured by using GRETAG MACBETH SPECTROSCAN SPM-50 (trade name, manufactured by GRETAG, US). The result was shown in Table 4.

(Image definition)

Images were printed with each of the inks shown in Table 2 in an inkjet printer of the thermal inkjet mode having 300 nozzles for various colors each having a nozzle diameter of 18 μm and arranged at a 600-dpi pitch, an inkjet printer having a stacked PZT for pressurization of the liquid chamber channel and having 300 nozzles for various colors each having a nozzle diameter of 28 μm and arranged at a 200 dpi pitch, and an inkjet printer having an electrostatic actuator used for pressurization of the liquid chamber channel having 300 nozzles for various colors. Then, blurring at the interface of two color-overlapping regions, image blurring, color tone and density were comprehensively evaluated visibly according to the criteria below. Other conditions are as follows: The printing papers used were commercial products shown below:

| | |
|---|---|
| Recycled paper (trade name) (PPC-Recycled Paper, manufactured by NBS Ricoh, type A) | 18 seconds |
| High quality paper (trade name) (MyPaper, manufactured by NBS Richo) | 23 seconds |
| Bond paper (trade name) (Gilbert bond, 25% Cotton, manufactured by Mead) | 31 seconds |
| Gloss-coated paper (trade name) (manufactured by Richo, Ricoh Business Coat Gloss 100) | less than 70 seconds |

(Evaluation Criteria)

5: No blurring was observed at the interface of two color-overlapping regions independently of the kind of paper, and the image has high image density and superior definition and color reproduction.
4: The image has a similar quality to that described above except that the image density is slightly lower than that in Criteria 5.
3: Blurring observed at the interface of two color-overlapping regions was slight, but unevenness of the secondary color and the like is observed depending on the kind of paper.
2: Blurring was observed at the interface of two color-overlapping regions depending on the kind of paper.
1: Image density is low and the definition is also inferior comparing to Criteria 2.

[Table 4]

| # | Pigment | Dispersant | Plain paper O.D. | Image Definition | Remarks |
|---|---|---|---|---|---|
| 101 | CIPR122/CIPV19 | D-1 | 1.39 | 5 | WE |
| 102 | CIPR122/CIPV19 | D-1 | 1.38 | 5 | WE |
| 103 | CIPR122/CIPV19 | D-30 | 1.41 | 5 | WE |
| 104 | CIPR202/CIPV19 | D-23 | 1.40 | 5 | WE |
| 105 | CIPY128/CIPY74 | D-30 | 1.38 | 5 | WE |
| 106 | CIPY128/CIOR13 | D-1 | 1.35 | 4 | WE |
| c01 | CIPR122/CIPV19 | St/MA | 1.35 | 1 | CE |
| c02 | CIPR122 | D-1 | 1.21 | 2 | CE |
| c03 | CIPV19 | D-1 | 1.20 | 2 | CE |
| c04 | CIPR122 | D-30 | 1.22 | 3 | CE |
| c05 | CIPV19 | D-30 | 1.21 | 3 | CE |

The results in Table 4 show that the printed articles obtained by using the ink according to the present invention are superior in image definition. In addition, similar evaluation of the inks in Table 3 showed that it was not possible to eject ink reliably with the inks c01 to c05. On the other hand, it was possible to eject ink reliably and obtain a distinct image with the inks 101 to 106.

(X-ray diffraction analysis)

The aggregates 101 to 102, c02 to c05 of pigments and polymer compound used in the inks of the Examples were dried under vacuum (25°C), respectively to give dry colorant powders. These dry powders were analyzed by X-ray diffractometry by using RINT2500 (trade name) manufactured by Rigaku Corp. The X-ray diffraction measurement was carried out by using a copper target and Cu-K$\alpha$1 line.

The crystallite diameter of each of the pigment particles was calculated from the spectrum obtained, and it was observed that the crystallite diameter of the colorant particles of the Magenta Pigment 101 was 10.8$\pm$2 nm and that a halo was observed in the spectrum of the Magenta Pigment sample 102 at the region of 2$\theta$ in the range of 4° to 70°.

In addition, the crystallite diameters of the dry powders were measured, and the crystal diameters thereof were respectively found as the following table.

[Table 5]

| Powder | Pigment | Dispersant | Crystal dia. |
|---|---|---|---|
| 101 | CIPR122/CIPV19 | D-1 | 10.8$\pm$2 nm(108$\pm$20 Å) |
| 102 | CIPR122/CIPV19 | D-1 | Halo (2$\theta$ 4° to 70°) |

(continued)

| Powder | Pigment | Dispersant | Crystal dia. |
|---|---|---|---|
| 103 | CIPR122/CIPV19 | D-30 | 17.3±2 nm (173±20Å) |
| 104 | CIPR202/CIPV19 | D-23 | 13.3±2 nm (133±20Å) |
| 105 | CIPY128/CIPY74 | D-30 | 15.5±2 nm (155±20Å) |
| 106 | CIPY128/CIOR13 | D-1 | 12.6±2 nm (126±20Å) |
| c01 | CIPR122/CIPV19 | St/MA | |
| c02 | CIPR122 | D-1 | 17.9±2 nm (179±20Å) |
| c03 | CIPV19 | D-1 | 16.5±2 nm (165±20Å) |
| c04 | CIPR122 | D-30 | 16.0±2 nm (160±20Å) |
| c05 | CIPV19 | D-30 | 14.1±2 nm (141±20Å) |

The results show that the colorant fine particles contained in the inks 101 and 103 to 106, c01 to c05 of the Examples have crystalline structures. In addition, the spectrum of the dry powder 101 is different in peak position from those of the dry powders c02 to c05, indicating that a solid solution different from that obtained by using a single kind of pigment is formed.

[Evaluation of Light Fastness]

Each of the printed articles used for evaluation of image definition shown in Table 4 was placed in a fademeter and irradiated with a xenon lamp at an illuminance of 170,000 lux for 4 days, for evaluation of light fastness. It is visibly observed that the printed article prepared with the ink 102 containing colorant particles showing hallow in X-ray diffraction analysis showed slightly more discoloration, compared to the prints prepared by using other inks. In addition, it is visibly observed that the printed articles prepared with inks 101 and 102 showed that the printed articles were higher in density and develop vivid colors more efficiently, compared to the printed articles prepared with the inks c02 to c05 containing a single kind of pigment.

(Zeta potential measurement)

The ink zeta potentials of the dispersions (inks) 101 and c01 shown in Table 2 were measured by using Zetasizer 3000HS (trade name) manufactured by Malvern (England), and pH dependence thereof in the pH range of 4 to 9 was measured.

Results are shown in Fig. 1. As obvious from Fig. 1, the zeta potential of the ink 101 according to the present invention varies crossing zero and the polarity of the electric charge is reversed.

(Image fixing test)

For determination of the aggregation reaction rate of each ink, ink ejection tests were carried out by using the inks 101 and c01 and a processing solution prepared below.

<Composition of treatment liquid>

· 2-pyrrolidone-5-carboxylic acid 10 mass parts (manufactured by Tokyo Chemical Industry Co., Ltd.)
· Lithium hydroxide monohydrate 2 mass parts (manufactured by Wako Pure Chemical Industries)
· Glycerin 13 mass parts (manufactured by Wako Pure Chemical Industries)
· Diethylene glycol 10 mass parts (manufactured by Wako Pure Chemical Industries)
· OLFINE E1010 1.5 mass parts (trade name, manufactured by Nissin Chemical Industry Co., Ltd.)
· Ion exchange water 73.5 mass parts

Physical properties of the processing solution T-1 obtained were measured, and the results are as follows: pH: 3.6, surface tension: 28.0 mN/m, and viscosity: 3.1 mPa·s. The surface tension was measured by platinum plate method,

by using CBVP-Z (trade name) manufactured by Kyowa Interface Science.

(Dropping test)

A processing solution was coated as a medium on a silicone rubber sheet of SR series product having a thickness of 0.5 mm (trade name, manufactured by Tigers Polymer Corp.), to a film thickness of approximately 5 $\mu$m by using a wire bar coater (coater for a coating in the wire bar mode). In addition, an ink was ejected on the medium at a definition of 1200x600 dpi and an ink droplet quantity of 12 pL, by using a GELJETG 717 printer head (trade name) manufactured by Ricoh. The solvent was removed, one second after ink ejection, with a solvent removal roller with K-dry (trade name) manufactured by Nippon Paper Crecia wound around it. The aggregation reaction rate of the ink 101 and c01 was evaluated, while observing deposition of the colorant on the K-dry.

No deposition of colorant was observed with the ink 101, while deposition of colorant was observed with the ink c01. The results indicate that ink aggregation rate of the ink according to the present invention after printing is faster. The results also suggest that the ink gives a high-definition image with smaller blurring when used in an image-printing system employing a processing solution as well.

Having described our invention as related to the present embodiments, it is our intention that the invention not be limited by any of the details of the description, unless otherwise specified, but rather be construed broadly within its spirit and scope as set out in the accompanying claims.

This application claims priority on Patent Application No. 2009-084650 filed in Japan on March 31, 2009, which is entirely herein incorporated by reference.

## Claims

1. A water-insoluble colorant dispersion, comprising:

    fine particles of a water-insoluble colorant containing at least two kinds of colorant; and
    a polymer compound having at least one repeating unit selected from the group consisting of repeating units represented by the following Formula (1) or (2);

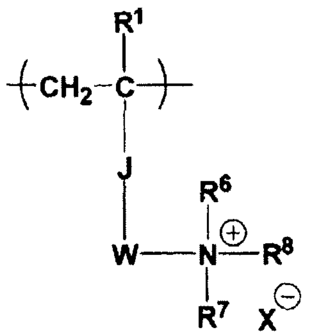

Formula (1)

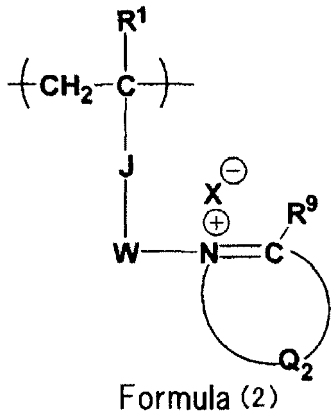

Formula (2)

    wherein, $R^6$ to $R^8$ each independently represent a hydrogen atom or a substituent; $X^-$ is an anion group balancing with the cation electric charge on the nitrogen atom; $R^1$ represents a hydrogen atom or a substituent; J represents -CO-, - COO-, -CONR$^{10}$-, -OCO-, or a methylene group, a phenylene group, or -$C_6H_4CO$-; $R^{10}$ represents a hydrogen atom, an alkyl group, an aryl group, or an aralkyl group; W represents a single bond or a divalent linking group; $R^9$ represents a hydrogen atom or a substituent; $Q_2$ represents a group of atoms which is necessary for forming an unsaturated ring together with a carbon atom and a nitrogen atom.

2. The water-insoluble colorant dispersion as described in claim 1, wherein the polymer compound additionally has a repeating unit having at least one kind of acid group as hydrophilic unit.

3. The water-insoluble colorant dispersion as described in claim 2, wherein the acid group is selected from the group consisting of a carboxylic acid group, a sulfonic acid group, a hydroxyl group, and a phosphoric acid group.

4. The water-insoluble colorant dispersion as described in any one of claims 1 to 3, wherein the water-insoluble colorant is a solid-solution pigment containing the at least two kinds of pigment.

5. The water-insoluble colorant dispersion as described in any one f claims 1 to 4, wherein the colorant particle has a crystal structure.

6. The water-insoluble colorant dispersion as described in any one of claims 1 to 5, wherein the average particle diameter of the fine particles is 5 to 100 nm.

7. The water-insoluble colorant dispersion as described in any one of claims 1 to 6, wherein the water-insoluble colorant is an organic pigment selected from the group consisting of quinacridone organic pigments, diketopyrrolopyrrole organic pigments, mono azo yellow organic pigments, condensed azo organic pigments, quinophthalone organic pigments, benz-imidazolone organic pigments, and disazo yellow organic pigments.

8. The water-insoluble colorant dispersion as described in any one of claims 1 to 7, wherein the water-insoluble colorant is a solid-solution pigment containing two or more kinds of quinacridone compounds selected from the group consisting of unsubstituted quinacridone, 2,9-dimethylquinacridone, 2,9-dichloroquinacridone and 3,10-dichloroquinacridone.

9. A recording liquid comprising the fine particles of the water-insoluble colorant as described in any one of claims 1 to 8, wherein the fine particles of the water-insoluble colorant is contained in an amount of 0.1 to 20% by mass with respect to a total mass of the recording liquid.

10. The recording liquid as described in claim 9, wherein the recording liquid is an inkjet recording liquid.

11. An ink set comprising the recording liquid as described in claim 9 or 10.

12. A printed article which contains fine particles of a water-insoluble colorant, the printed article formed by the recording liquid as described in any one of claim 9 or 10, using a provider, wherein the provider has a function to adjust an applied amount or concentration of the recording liquid, thereby light-to-dark contrast of the printed article is adjusted.

13. An image-forming method, which comprises:

Providing: a recoding material, the recording liquid of claim 9 or 10, and an image-forming apparatus; and recording an image of the recording liquid on the recording material with the image-forming apparatus.

14. A method of producing a water-insoluble colorant dispersion, comprising the steps of:

dissolving at least two kinds of water-insoluble colorant, a base, and a polymer compound in an aprotic water-soluble organic solvent,
the polymer compound having

(i) one or more acid groups selected from the group consisting of a carboxylic group, a sulfonic group, a hydroxyl group and
(ii) a phosphoric group as hydrophilic unit and at least one repeating unit selected from the repeating units represented by the following Formula (1) or (2); and

bringing the dissolved solution obtained in the step above into contact with an aqueous medium so as to generate fine particles of the water-insoluble colorant;

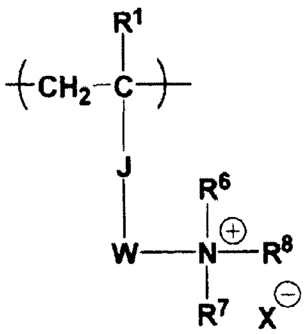

Formula (1)

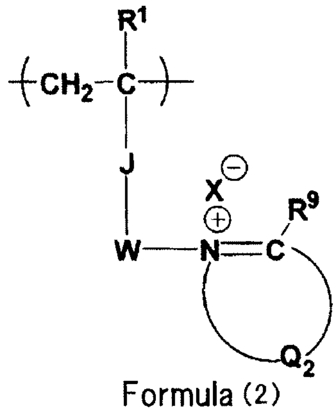

Formula (2)

wherein, $R^6$ to $R^8$ each independently represent a hydrogen atom or a substituent; $X^-$ is an anion group balancing with the cation electric charge on the nitrogen atom; $R^1$ represents a hydrogen atom or a substituent; J represents -CO-, - COO-, $-CONR^{10}-$, -OCO-, or a methylene group, a phenylene group, or $-C_6H_4CO-$; $R^{10}$ represents a hydrogen atom, an alkyl group, an aryl group, or an aralkyl group; W represents a single bond or a divalent linking group; $R^9$ represents a hydrogen atom or a substituent; $Q_2$ represents a group of atoms which is necessary for forming an unsaturated ring together with a carbon atom and a nitrogen atom.

**15.** The method of producing a water-insoluble colorant dispersion as described in claim 14, further comprising a step of heat-treating the dispersion.

Fig. 1

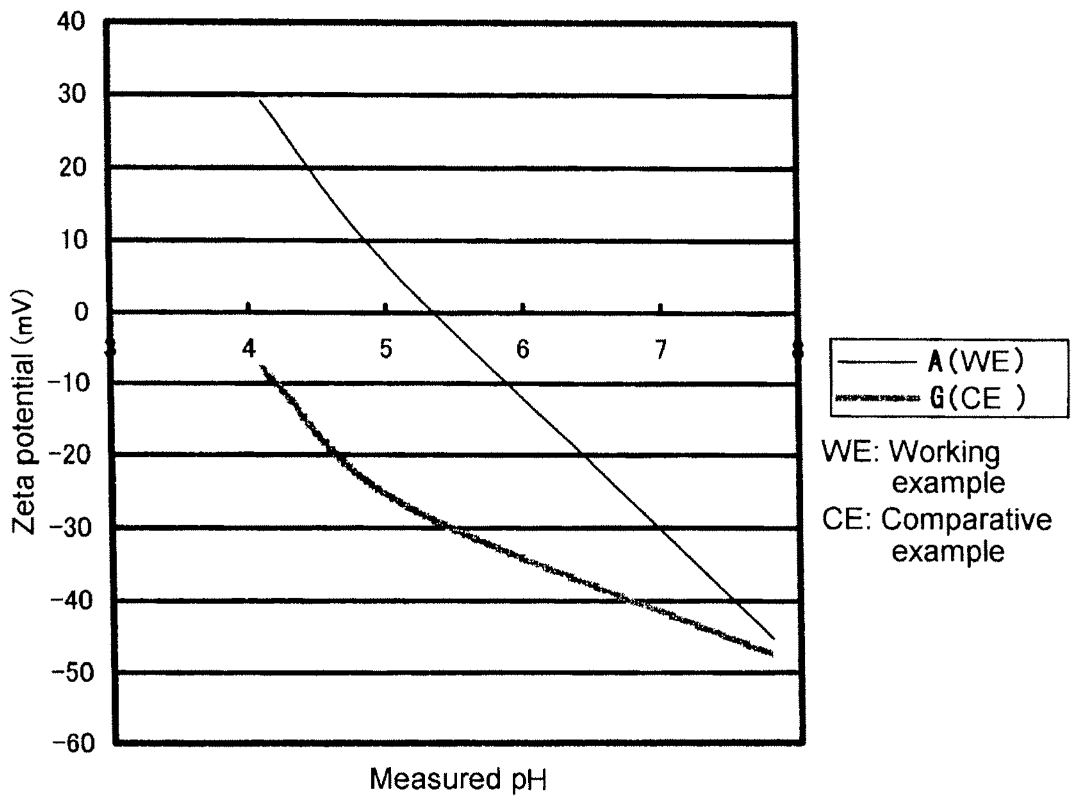
40
30
20
10
0
-10
-20
-30
-40
-50
-60
4
5
6
7
Zeta potential (mV)
Measured pH
A(WE)
G(CE )
WE: Working example
CE: Comparative example

Europäisches Patentamt
European Patent Office
Office européen des brevets

# EUROPEAN SEARCH REPORT

Application Number
EP 10 15 8380

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 2 110 416 A2 (FUJIFILM CORP [JP]) 21 October 2009 (2009-10-21) * paragraph [0060]; examples * | 1-15 | INV. C09D11/00 C09D11/10 C09D17/00 |
| X,P | EP 2 107 090 A2 (FUJIFILM CORP [JP]) 7 October 2009 (2009-10-07) * paragraph [0055]; claims; examples * | 1-15 | |
| X | WO 2004/090030 A1 (CIBA SC HOLDING AG [CH]; VOGEL THOMAS [DE]; SODER SIBYLLE [CH]; SIMMEN) 21 October 2004 (2004-10-21) * claims; examples * | 1-15 | |
| X | EP 1 270 624 A1 (KANSAI PAINT CO LTD [JP]) 2 January 2003 (2003-01-02) * claims; examples * | 1-15 | |
| X | EP 1 529 821 A2 (GOLDSCHMIDT GMBH [DE]) 11 May 2005 (2005-05-11) * page 4, line 25 - page 5, line 10; claims; examples * | 1-15 | TECHNICAL FIELDS SEARCHED (IPC) |
| X | EP 0 736 582 A2 (CANON KK [JP]) 9 October 1996 (1996-10-09) * claims; examples * | 1-15 | C09D |

The present search report has been drawn up for all claims

| Place of search | Date of completion of the search | Examiner |
|---|---|---|
| Munich | 23 June 2010 | Schmitz, Volker |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 10 15 8380

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2010

| Patent document cited in search report | | Publication date | Patent family member(s) | | | Publication date |
|---|---|---|---|---|---|---|
| EP 2110416 | A2 | 21-10-2009 | JP | 2009256595 | A | 05-11-2009 |
| EP 2107090 | A2 | 07-10-2009 | JP | 2009263626 | A | 12-11-2009 |
| | | | US | 2009252875 | A1 | 08-10-2009 |
| WO 2004090030 | A1 | 21-10-2004 | AU | 2004228365 | A1 | 21-10-2004 |
| | | | CA | 2520066 | A1 | 21-10-2004 |
| | | | CN | 1802409 | A | 12-07-2006 |
| | | | JP | 2006526670 | T | 24-11-2006 |
| | | | KR | 20050123148 | A | 29-12-2005 |
| | | | MX | PA05010668 | A | 12-12-2005 |
| | | | US | 2006229407 | A1 | 12-10-2006 |
| EP 1270624 | A1 | 02-01-2003 | DE | 60131634 | T2 | 30-10-2008 |
| | | | WO | 0231010 | A1 | 18-04-2002 |
| | | | JP | 4049670 | B2 | 20-02-2008 |
| | | | US | 2003125414 | A1 | 03-07-2003 |
| | | | US | 2006052514 | A1 | 09-03-2006 |
| EP 1529821 | A2 | 11-05-2005 | DE | 10348825 | A1 | 02-06-2005 |
| | | | US | 2005085563 | A1 | 21-04-2005 |
| EP 0736582 | A2 | 09-10-1996 | DE | 69615730 | D1 | 15-11-2001 |
| | | | DE | 69615730 | T2 | 04-07-2002 |
| | | | US | 6174354 | B1 | 16-01-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4152820 B
- JP 2004002715 A
- JP 2004231692 A
- JP 2007186697 A
- JP 2006274020 A
- WO 2006137393 A
- WO 2006121018 A
- JP 2005307154 A
- JP 2007039643 A
- JP 3936558 B
- JP 2009084650 A


### Non-patent literature cited in the description


- **Hirotaka Iijima ; Kenichi Okubo ; Kunitsuna Sasaki.** *Konica Minolta Technology Report,* 2007, vol. 4
- **R. F. Fedors.** *Polymer Engineering Science,* 1967, vol. 14, 147